(19) Europäisches Patentamt
European Patent Office
Office européen des brevets

(11) **EP 4 704 443 A1**

(12) **EUROPEAN PATENT APPLICATION**

(43) Date of publication:
04.03.2026 Bulletin 2026/10

(21) Application number: 25197794.8

(22) Date of filing: 25.08.2025

(51) International Patent Classification (IPC):
*H04R 25/00* (2006.01)    *G06N 3/08* (2023.01)

(52) Cooperative Patent Classification (CPC):
**H04R 25/507; H04R 25/453;** G06N 3/08;
H04R 2225/41

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: 29.08.2024 EP 24197258

(71) Applicant: Oticon A/S
2765 Smørum (DK)

(72) Inventors:
• GUO, Meng
  DK-2765 Smørum (DK)
• JENSEN, Jesper
  DK-2765 Smørum (DK)
• LUDAKI, Eleftheria
  DK-2765 Smørum (DK)

(74) Representative: Demant
Demant A/S
Kongebakken 9
2765 Smørum (DK)

(54) **A HEARING AID WITH MACHINE LEARNING-BASED FEEDBACK CONTROL**

(57)    A method, performed by an electronic device, for training a machine learning (ML) model for use in a feedback control system of a hearing aid is provided. The method comprises executing a plurality of training iterations. Each training iteration of the plurality of training iterations comprises obtaining training data. The training data comprises a training input signal and a training processed signal. The training input signal comprises an external input signal component and a feedback input signal component. The external input signal component is indicative of sound from a known, simulated acoustic environment of the hearing aid. The feedback input signal component is indicative of acoustic and/or mechanical feedback originating from a feedback path of the hearing aid. The training processed signal is indicative of one or more applied processing algorithms to a training feedback corrected input signal. The training feedback corrected input signal is indicative of a feedback corrected version of the training input signal. Each training iteration of the plurality of training iterations comprises obtaining target data comprising a training feedback path transfer function representative of an impulse response of the feedback path of the hearing aid. Each training iteration of the plurality of training iterations comprises determining, based on the training data, an estimate of the training feedback path transfer function. Each training iteration of the plurality of training iterations comprises updating the ML model based on the target data and the estimate of the training feedback path transfer function. The ML model comprises, in the following order, a convolutional layer, a first fully connected (FC) layer, and a long-short term memory (LSTM) layer.

**Fig. 2**

## Description

TECHNICAL FIELD

The present application relates to the field of hearing aids, in particular to hearing aids with machine learning (ML) feedback control. The present application relates to a method for training a ML model for use in a feedback control system of a hearing aid, and a related hearing aid.

BACKGROUND

Acoustic feedback cancellation is an important and challenging task in audio processing systems aiming to mitigate effects of feedback loops on system stability and sound quality. Acoustic feedback occurs when a sound signal from a speaker is picked up by a microphone, amplified, and then played back through the same speaker, creating a continuous loop (e.g., a feedback loop). This can lead to undesirable effects such as echoes, ringing, reverberant sounds, and howling.

State-of-the-art techniques rely on adaptive filtering algorithms facing challenges in balancing between rapid convergence and low steady-state error. In particular, such state-of-the-art techniques (e.g., variable step-size algorithms) may have reached a plateau in the sense that such state-of-the-art techniques are unable to accurately estimate the acoustic feedback as well as to quickly react to acoustic feedback path changes (e.g., less than a few hundred milliseconds to maintain stability in a hearing aid (HA) setting) in real-world conditions.

Machine learning techniques (e.g., deep neural networks (DNNs)) have been incorporated as optimal step-size predictors (e.g., estimators) in filter-based acoustic feedback cancellation (AFC) systems as well as in acoustic echo cancellation (AEC) systems. In particular, such existing ML-based AFC systems that are configured to directly predict a feedback-free signal (e.g., a feedback corrected signal) can introduce artifacts in the feedback-free signal when such prediction is not optimal.

SUMMARY

Sound quality and speech intelligibility may be likely compromised when an ML-based AFC system is configured to directly predict the signal of interest (e.g., instead of an intermediate signal). In addition, training such existing ML-based AFC systems can be computationally intensive.

There may be a need for an ML-based feedback control system (e.g., a feedback control system comprising a trained ML model) which may address the existing shortcomings and may provide for a satisfactory trade-off between convergence rate and steady-state behavior without compromising sound quality.

Embodiments of the present disclosure provide for a method of training an ML model for use in a feedback control system. In other words, the ML model is trained in such a way that the ML-based feedback control system is capable of providing such satisfactory trade-off between convergence rate and steady-state behavior without compromising sound quality. In particular, the ML model is trained to predict an intermediate signal, with a signal of interest being determined based on the intermediate signal. For example, when such prediction is not optimal, the intermediate signal can be post-processed for providing a more accurate signal of interest. Put differently, embodiments of the present disclosure can allow post-processing of the intermediate signal, e.g., an output of the ML model, for provision of an improved version of a feedback-free signal, as opposed to conventional adaptive filtering techniques and to the existing ML-based AFC techniques.

A method for training:

A method, performed by an electronic device, for training a ML model for use in a feedback control system of a hearing aid is provided. The feedback control system comprises the ML model.

The method comprises executing a plurality of training iterations.

Each training iteration of the plurality of training iterations comprises obtaining training data.

The training data comprises a training input signal and a training processed signal. The training input signal comprises an external input signal component and a feedback input signal component. The external input signal component is indicative of sound from a known, simulated acoustic environment of the hearing aid. The feedback input signal component is indicative of acoustic and/or mechanical feedback originating from a feedback path of the hearing aid.

The training processed signal is indicative of one or more applied processing algorithms to a training feedback corrected input signal. The training feedback corrected input signal is indicative of a feedback corrected version of the training input signal. For example, the training feedback corrected input signal is indicative of an acoustic and/or mechanical feedback corrected version of the training input signal. In other words, the training processed signal may be a processed version of the training feedback corrected input signal. In one or more example methods, the training data for (e.g., obtained in) each training iteration of the plurality of training iterations can be construed as a training sequence.

Each training iteration of the plurality of training iterations comprises obtaining target data comprising a training feedback path transfer function. The training feedback path transfer function is representative of an impulse response of the feedback path (FBP) of the hearing aid. The target data may be seen as reference data.

Each training iteration of the plurality of training iterations comprises determining, based on the training data, an estimate of the training feedback path transfer function.

Each training iteration of the plurality of training iterations comprises updating the ML model based on the target data (e.g., the training feedback path transfer function) and the estimate of the training feedback path transfer function.

The ML model comprises, in the following order, a convolutional layer, a first fully connected (FC) layer, and a long-short term memory (LSTM) layer.

In one or more example methods, the method is performed by an electronic device (e.g., a computer). For example, the method is performed by an external device (e.g., external to the hearing aid). For example, the method of training may be a computer-implemented method. For example, the method comprises executing, by an electronic device (e.g., a computer) the plurality of training iterations (e.g., rounds).

In one or more example methods, the method of training can be performed in an off-line training session. In other words, a known, simulated acoustic environment may be construed as an environment of the hearing aid modelling (e.g., simulating) real-world conditions. For example, such known, simulated acoustic environment can be generated by computer simulation. For example, an off-line training session can be construed as a representative modelling of real-word conditions (e.g., challenging acoustic conditions) in a computer simulation.

In one or more example methods, the method can be performed using training data and target data from a plurality of known, simulated acoustic environments. For example, the training data and the target data can be provided by computer simulation of the hearing aid in an acoustic environment (e.g., or in a plurality of acoustic environments), the acoustic environment modelling (e.g., simulating) real-world conditions and the hearing aid comprising a known feedback system (e.g., an ideal feedback system). In other words, the method can provide that the training data and the target data are generated by computer simulation (e.g., by the electronic device). For example, obtaining the training data and the target data comprises generating the training data and target data by computer simulation. For example, the method can comprise obtaining the training data and the target data from a memory of the electronic device (e.g., a computer). Optionally, the method can comprise obtaining the training data and the target data from a memory of the hearing aid.

For example, the training data and the target can be generated using a known feedback control system (e.g., an ideal feedback control system), such as in static feedback situations and/or dynamic feedback situations (e.g., with dynamic feedback path changes). For example, the training data and the target data can be provided by computer simulation of the hearing aid in the known, simulated acoustic environment, the hearing aid comprising the known (e.g., ideal) feedback control system.

The training data and the target data may be representative of a known feedback control system, such as a feedback control system capable of reacting to feedback path changes instantly without the need of a convergence period known from an adaptive filter. For example, a known feedback control system may refer to a feedback control system capable of reacting instantly and accurately to feedback changes, as the training feedback path transfer function (e.g., the acoustic feedback originating from a feedback path of the hearing aid) is known. For example, a known feedback control system may also be construed as a feedback control system having a known feedback path transfer function, such as a measured feedback path transfer function (e.g. measured in realistic acoustic environments) or a simulated (e.g., synthetically generated) feedback path transfer function. In other words, the ML model may be trained using measured feedback path transfer functions and synthetically generated feedback path transfer functions. Such synthetic feedback path transfer functions may be generated (e.g., via computer simulation) to match realistic acoustic environments.

In one or more example methods, training the ML with training data and target data obtained from a hearing aid in a known, simulated environment, the hearing aid comprising the known feedback control system (e.g., ideal feedback control system), can prevent the ML model from learning from disadvantageous feedback control systems (e.g., state-of-the-art feedback control systems, such as feedback control systems exhibiting slow convergence, wrong reactions to feedback path changes, among others disadvantageous effects). In other words, an ideal feedback control system may not suffer from several disadvantages from state-of-the-art feedback control systems (e.g., slow convergence, wrong reactions, etc.).

Embodiments of the present application may provide for a ML model trained based on a known (e.g., ideal, perfect) feedback control system, such as where there is no need for decorrelation. The training data and the target data may be generated with a view to minimizing artefacts in the output signal (e.g., the training processed signal) in connection with sudden changes of the feedback path. The training data and the target data may be construed as data for training the ML model, e.g., for training the feedback control system of the hearing aid.

In one or more example methods, the training data and the target data can be generated by computer simulation to reflect the known (e.g., ideal) feedback control system. For example, the known feedback control system is used to generate data for the training of the ML model, in static feedback situations as well as in dynamic feedback situations (e.g., with dynamic feedback path changes).

In one or more example methods, the external input signal component of the training input signal can comprise one or more of: white noise, speech, and music signals. In other words, the training input signal may comprise white noise, or speech, or music signals, or a mixture thereof. For example, the external input signal may comprise data from a multitude of sound sources. The plurality of sound sources may comprise one or more of: noise sounds, speech sounds, music sounds, sounds recorded from everyday life as the incoming sounds to the hearing aid. The external input signal component may be the part of the training input signal that is not due to feedback. In other words, the external input signal component (e.g., denoted as $x(n)$) may be the desired signal to be processed by a signal processing unit of the hearing aid.

In one or more example methods, the training data can comprise a plurality of training input signals and a training processed signal. For example, each of the plurality of training input signals comprises an external input signal component and a feedback input signal component. The feedback input signal component indicative of acoustic feedback originating from a feedback path of the hearing aid, the hearing aid comprising a plurality of feedback paths. For example, the target data can comprise a plurality of feedback path transfer functions, each of the plurality of feedback path transfer functions being representative of an impulse response of a corresponding feedback path of the plurality of feedback paths.

In one or more example methods, the method (e.g., each training iteration of the plurality of training iterations) comprises obtaining the training data and the target data from a memory of the hearing aid (e.g., in the known, simulated environment) or from a memory of an electronic device (such as a computer). The electronic device may be the electronic device performing the method of training. The electronic device may be another electronic device different from the electronic device performing the method of training.

In one or more example methods, an applied processing algorithm (e.g., technique) can comprise one or more of: a noise reduction algorithm (e.g. related to beamforming and/or post-filtering), a compression algorithm (e.g. related to providing a frequency and level dependent gain), a transform-domain algorithm (e.g., a frequency domain transform algorithm), a spatial sound processing algorithm, and any other suitable processing algorithm. For example, the compression algorithm can be seen as a processing algorithm for compensating for a hearing impairment of the user. For example, the transform-domain algorithm can be seen as a processing algorithm for allow processing in a transform domain (e.g., in a number of frequency bands).

Optionally, the training processed signal can be indicative of an applied frequency- and/or level-dependent gain function to the training feedback corrected input signal. In other words, the applied frequency- and/or level-dependent gain function may be indicative of a function modelling the one or more processing algorithms. A frequency- and/or level-dependent gain function may be construed as a time-varying and/or frequency dependent function. A frequency- and/or level-dependent gain function may be construed as a forward path gain function.

In one or more example methods, the acoustic and/or mechanical feedback originates from a feedback path from an output unit (e.g., an output transducer) to the input unit (e.g., an input transducer) of the hearing aid. For example, a feedback path transfer function (e.g., the training feedback path transfer function) may be denoted as $\boldsymbol{h}(n) = [h_1(n), h_2(n), ..., h_L(n)]^T$, with $L$ denoting a length of an impulse response of the feedback path and $n$ denoting a (e.g., discrete) time index.

In one or more example methods, a processed signal (e.g., the training processed signal, such as denoted as $u(n)$) can be seen as an output signal to be converted into an acoustic signal (e.g., a sound) by a loudspeaker (e.g., comprised in the output unit of the hearing aid). The training processed signal may be an amplified and/or a processed version of the external input signal component.

In one or more example methods, the feedback input signal component (e.g., denoted as $v(n)$) may be seen as a filtered version of the training processed signal. For example, the training processed signal can be filtered by the training feedback path transfer function for provision of such filtered version.

In one or more example methods, the training input signal (e.g., denoted as $y(n)$) can be seen as a signal picked up by an input transducer (e.g., a microphone) comprised in the input unit of the hearing aid. In one or more example methods, the training input signal is corrupted by the acoustic and/or mechanical feedback. The training input signal may be denoted as $y(n) = v(n) + x(n)$.

In one or more example methods, a training mode of operation (e.g., a training stage) may be followed by the normal mode of operation (e.g., an inference stage). Put differently, after the training stage, a plurality of weights of the ML model may be fixed. In the normal mode of operation, the ML model is trained (e.g., the plurality of weights may be fixed). In the training mode of operation, the plurality weights of the ML model may be updated based on the training data and the target data. In other words, the ML model may be trained by updating the ML model (e.g., the plurality of weights) during the training mode of operation. For example, the method of training may be performed during the training mode of operation (e.g., of the hearing aid).

In one or more example methods, the ML model is configured to receive as input the training input signal and the training processed signal. Optionally, the ML model can be configured to receive as input signals deriving from (e.g., determined based on) the training input signal and the training processed signal. In one or more example methods, the ML model is configured to provide as output the estimate of the training feedback path transfer function.

In one or more example methods, the ML model can comprise an input layer, a plurality of hidden layers, and an output layer. For example, the input layer comprises the convolutional layer. For example, the plurality of hidden layers can comprise the first FC layer and the LSTM layer. For example, the output layer can comprise a pooling layer.

In one or more example methods, an FC layer can comprise a feedforward (FF) layer. For example, the ML model can comprise a deep neural network (DNN).

Embodiments of the present disclosure can provide a hearing aid with improved signal quality and signal intelligibility as the ML model for use in the feedback control system of such hearing aid is configured to determine (e.g., provide) an estimate of the training feedback path transfer function (e.g., of the impulse response of the feedback path), thereby allowing post-processing of such estimate. Post-processing of such estimate can advantageously enable removal of artifacts that can result from non-optimal predictions by the ML model, in turn increasing signal quality and signal intelligibility. In other words, embodiments of the present disclosure may provide for method for training a ML model to estimate a feedback impulse response, instead of directly estimating the feedback correct input signal (e.g., offering an alternative to conventional adaptive filtering techniques and existing ML techniques). The estimate of the training feedback path transfer function may comprise imperfections caused by such non-optimal predictions which can be either removed from the training feedback path transfer function in the post-processing or kept when such imperfections are negligible (e.g., minor).

Embodiments of the present disclosure may provide for a ML-based feedback control method (e.g., a training method) functioning in a frame-based way to directly determine an estimate of a feedback path impulse response. In other words, embodiments of the present disclosure may require a ML model comprising, in the following order, a convolutional layer, a first fully connected (FC) layer, and an LSTM layer. Such layer configuration (and respective signal processing), in the previously mentioned layer order, may allow a faster convergence rate along with lower steady state errors, in turn improving the trade-off between convergence rate and steady-state error. In other words, embodiments of the present disclosure may provide for a faster and more robust feedback cancellation (e.g., control) system.

Furthermore, the estimate of the training feedback path transfer function may comprise an acceptable size, thereby decreasing the computational effort of the ML model (e.g., in a training stage and/or inference stage). For example, a set of feedback path transfer functions (e.g., impulse responses) are to a large extent determined by an input transducer (e.g., a microphone) location and an output transducer (e.g., a loudspeaker) location, which does not require a large representation space (e.g., a large variety of signals), and, hence more easily estimated (e.g., represented) with a ML model (e.g., a DNN) having a restricted size.

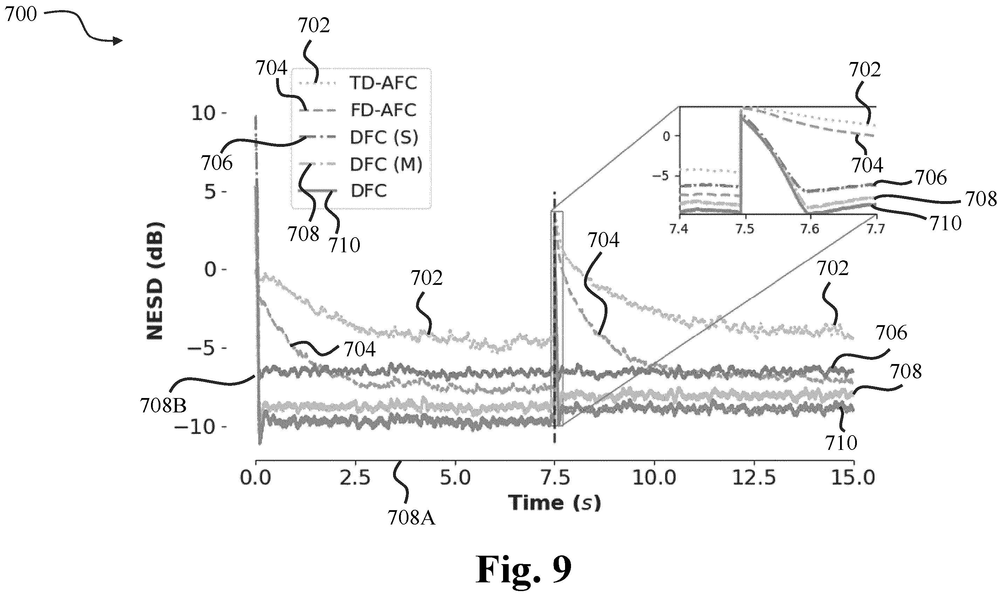

The method for training the ML model for use in the feedback control system of such hearing aid may be referred as a deep feedback compensation method (e.g., DFC, DFC(M), DFC(S) with reference to FIG. 9) . The feedback control system comprising the trained ML model (e.g., a ML-based feedback control system) of such hearing aid may be referred as an DFC system.

In one or more example methods, the ML model further comprises one or more of: a second FC layer and a third FC layer. In one or more example methods, each of the first FC layer, the second FC layer, and the third FC layer comprises an FC-based technique indicative of an activation function. In other words, the at least one feedforward layer comprises an activation function. In one or more example methods, an activation function can introduce non-linearity to the ML model (e.g., to the layer of the ML model comprising the activation function). In one or more example methods, the at least feedforward layer can be configured to receive input data from a previous layer of the ML model. For example, the activation function can be one or more of: a rectified linear unit (RELU) function, a tangent hyperbolic (tanh) function, and a Soft-Max function. For example, the layer comprising the activation function is configured to transmit an output based on such processing to a next layer of the ML model.

In one or more example methods, the activation function comprises one or more of: a sigmoid function, a hyperbolic tangent (tanh), a rectified linear unit (ReLU) function, a leaky ReLU function, a swish function, and Gaussian Error linear unit (GELU) function. For example, a sigmoid function can be given by $f(x) = \sigma(x) = (1 + e^{-x})^{-1}$, with $x$ denoting the input data. A sigmoid function may be configured to map the input data to a range between 0 and 1. For example, a hyperbolic tangent function can be given by $f(x) = \tanh(x) = (e^x - e^{-x})/(e^x + e^{-x})$, with $x$ denoting the input data. A hyperbolic tangent may be configured to map the input data to a range between -1 and 1. For example, an ReLU function can be given by $f(x) = \max (0, x)$, with x denoting the input data. An ReLU function may be configured to convert the input data to zero when the input data is negative (e.g., $f(x) = 0$, if $x \leq 0$). An ReLU function may be configured to output the input data when the input data is positive (e.g., $f(x) = x$, if $x > 0$). For example, a leaky ReLU function can be given by $f(x) = \max (\alpha x, x)$, with x denoting the input data and $\alpha$ denoting a (small) positive constant. A leaky ReLU function may be configured to output the input data when the input data is positive (e.g., $f(x) = x$, if $x > 0$). A leaky ReLU function may be configured to convert the input data to a linear variation of the input data when the input data is negative (e.g., $f(x) = \alpha x$, if $x \leq 0$). For example, a swish function can be determined as $x\sigma(x)$, with $x$ denoting the input data (e.g., the input data of the layer comprising the activation function) and $\sigma(x)$ denoting a sigmoid function. A swish function may be seen as a sigmoid-based function. For example, a GELU function can be determined as $x\Phi(x)$, with $x$ denoting the input data and $\Phi(x)$ denoting a stan-

dard Gaussian cumulative distribution function.

For example, the activation function can further comprise an arctangent (arctan) function (e.g., $f(x) = \text{atan}(x)$), the arctangent function being configured to map the input data to a range between $-\pi/2$ and $\pi/2$. For example, the activation function can further comprise a Softplus function (e.g., given as $f(x) = \ln(1 + e^x)$). For example, the activation function can comprise one or more of: a sigmoid-based function, an ReLU-based function, an exponential linear unit (ELU)-based function, a square root linear unit (SRLU)-based function, a SoftMax function, and any other suitable activation function.

In one or more example methods, each layer of the ML model can comprise an activation layer. In one or more example methods, a recurrent neural network can comprise one or more of: an LSTM layer and a Gated Recurrent Unit (GRU) layer. In one or more example methods, a convolutional neural network (CNN) can comprise a convolutional layer.

For example, the plurality of hidden layers can comprise the first FC layer, the LSTM layer, and one or more (e.g., at least one) of the second FC layer and the third FC layer. For example, the output layer can comprise one or more of: the second FC layer, the third FC layer, and the pooling layer.

In one or more example methods, determining the estimate of the training feedback path transfer function comprises determining a first pre-processed signal by applying a pre-processing technique to the training input signal. In one or more example methods, determining the estimate of the training feedback path transfer function comprises determining a second pre-processed signal by applying the pre-processing technique to the training processed signal. In one or more example methods, determining the first pre-processed signal (e.g., applying the pre-processing technique to the training input signal) comprises determining a frequency-domain training input signal by applying a Fourier transform-based technique to the training input signal. In one or more example methods, determining the second pre-processed signal (e.g., applying the pre-processing technique to the training processed signal) comprises determining a frequency-domain training processed signal by applying the Fourier transform-based technique to the training processed signal.

For example, a Fourier transform-based technique comprises one or more of: a discrete Fourier transform (DFT) and a short-time Fourier transform (STFT). For example, applying a Fourier transform-based technique to the training input signal and the training processed signal comprises providing a time-frequency representation of the training input signal and the training processed signal, respectively. For example, the training input signal and the training processed signal are time-domain signals. For example, each of the frequency-domain training input signal and the frequency-domain training processed signal are frequency domain signals. A frequency domain signal may comprise a plurality of frequency components (e.g., bands), each of the plurality of frequency components comprising a plurality of time components (e.g., or at least one time component).

In one or more example methods, the training input signal and the training processed signal can be given by $y(n)$ and $u(n)$, with $n$ denoting a time index (e.g., a discrete time index). In one or more example methods, each of the frequency-domain training input signal and the frequency-domain training processed signal comprises a set of frames and a set of frequency bins (e.g., units). For example, the frequency-domain training input signal and the frequency-domain training processed signal can be given by $Y(m, k)$ and $U(m, k)$, respectively, with $m = 1, 2, ..., M$ and $k = 1, 2, ..., K$. For example, $M$ denotes the set of frames (e.g., the number of frames). For example, $K$ denotes the set of frequency bins (e.g., the number of frequency bins, such as frequency units). For example, each of the frequency-domain training input signal and the frequency-domain training processed signal comprises a plurality of time-frequency bins (e.g., units).

In one or more example methods, determining the first pre-processed signal comprises determining a normalized version of the frequency-domain training input signal. Stated differently, determining the first pre-processed signal comprises applying a normalization operation to the frequency-domain training input signal. In one or more example methods, determining the second pre-processed signal comprises determining a normalized version of the frequency-domain training processed signal. Stated differently, determining the second pre-processed signal comprises applying a normalization operation to the frequency-domain training processed signal.

In one or more example methods, each of the frequency-domain training input signal and the frequency-domain training processed signal can be normalized with respect to an energy of the frequency-domain training processed signal. In other words, determining a normalized version of each of the frequency-domain training input signal and the frequency-domain training processed signal may comprise determining the energy of (e.g., associated with) the frequency-domain training processed signal (e.g., the energy of the training processed signal in the frequency domain).

For example, the normalized version of the frequency-domain training input signal can be given by $\overline{Y}(m, k)$, with $m = 1, 2, ..., M$ and $k = 1, 2, ..., K$. For example, the normalized version of the frequency-domain training input signal can be determined (e.g., computed) as $\overline{Y}(m,k) = Y(m, k)/E_U(m)$. For example, the normalized version of the frequency-domain training processed signal can be given by $\overline{U}(m, k)$, with $m = 1, 2, ..., M$ and $k = 1, 2, ..., K$. For example, the normalized version of the frequency-domain training input signal can be determined (e.g., computed) as $\overline{U}(m, k) = U(m, k)/E_U(m)$. For example, the energy of (e.g., associated with) the frequency-domain training processed signal can be determined        (e.g.,        computed)        as

$$E_U(m) = \sqrt{\sum_{k=1}^{K} |U(m,k)|^2}$$

In one or more example methods, the normalized version of the frequency-domain training input signal comprises a first primary component and a first secondary component. In one or more example methods, the normalized version of the frequency-domain training processed signal comprises a second primary component and a second secondary component. Put differently, applying the pre-processing technique to each the training input signal and the frequency-domain training processed signal may comprise applying a decomposition operation to each of the frequency-domain training input signal and the frequency-domain training processed signal, respectively. For example, applying a decomposition operation to the frequency-domain training input signal comprises decomposing the frequency-domain training input signal into the first primary component (e.g., a first magnitude or a first real value) and the first secondary component (e.g., a first phase or a first imaginary value). For example, the first primary component and the first secondary component can be given by $\overline{Y}_M(m, k)$ and $\overline{Y}_P(m, k)$. For example, applying a decomposition operation to the frequency-domain training processed signal comprises decomposing the frequency-domain training processed signal into the second primary component (e.g., a second magnitude or a second real value) and the second secondary component (e.g., a second phase or a second imaginary value). For example, the second primary component and the second secondary component can be given by $\overline{U}_M(m, k)$ and $\overline{U}_P(m, k)$.

For example, the first primary component can be a first logarithmic magnitude (e.g., $\overline{Y}_{log,M}(m, k)$). For example, the first logarithmic magnitude can be determined as $\overline{Y}_{log,M}(m, k) = \log_{10}(|\overline{Y}(m, k)|^2)$. For example, the second primary component can be a second logarithmic magnitude (e.g., $\overline{U}_{log,M}(m, k)$). For example, the second logarithmic magnitude can be determined as $\overline{U}_{log,M}(m, k) = \log_{10}(|\overline{U}(m, k)|^2)$.

For example, the first secondary component can be the first phase (e.g., $\overline{Y}_P(m, k)$). For example, the first phase can be determined as $\overline{Y}_P(m, k) = \arg(\overline{Y}(m, k))$. For example, the second secondary component can be the second phase (e.g., $\overline{U}_P(m, k)$). For example, the second phase can be determined as $\overline{U}_P(m, k) = \arg(\overline{U}(m, k))$.

For example, the first primary component is a matrix with a size (e.g., dimension) of $M \times K$, such as $\overline{Y}_{log,M} \in R^{M \times K}$. Matrix $\overline{Y}_{log,M}$ may comprise a plurality of elements $\overline{Y}_{log,M}(m, k)$, such as $MK$ magnitude elements. For example, the first secondary component is a matrix with a size (e.g., dimension) of $M \times K$, such as $\overline{Y}_P \in R^{M \times K}$. Matrix $\overline{Y}_P$ may comprise a plurality of elements $\overline{Y}_P(m, k)$, such as $MK$ phase elements.

For example, the second primary component is a matrix with a size (e.g., dimension) of $M \times K$, such as $\overline{U}_{log,M} \in R^{M \times K}$. Matrix $\overline{U}_{log,M}$ may comprise a plurality of elements $\overline{U}_{log,M}(m, k)$, such as $MK$ magnitude elements. For example, the second secondary component is a matrix with a size (e.g., dimension) of $M \times K$, such as $\overline{U}_P \in R^{M \times K}$. Matrix $\overline{U}_P$ may comprise a plurality of elements $\overline{U}_P(m, k)$, such as $MK$ phase elements.

In one or more example methods, the first pre-processed signal can be seen as a matrix comprising the first primary component and the first secondary component (e.g., matrix $\overline{Y}_{pre} = [\overline{Y}_{log,M} \ \overline{Y}_P] \in R^{M \times 2K}$, such as with a size of $M \times 2K$). In one or more example methods, the second pre-processed signal may be seen as a matrix comprising the second primary component and the second secondary component (e.g., matrix $\overline{U}_{pre} = [\overline{U}_{log,M} \ \overline{U}_P] \in R^{M \times 2K}$, such as with a size of $M \times 2K$). In one or more example methods, the size of the first pre-processed signal is the same as the size of the second pre-processed signal.

In one or more example methods, each of the first pre-processed signal and the second pre-processed signal can be seen as a feature signal (e.g., feature matrix).

For example, the pre-processing technique comprises one or more of: the Fourier transform-based technique, the normalization operation, and the decomposition operation. For example, the pre-processing technique comprises the Fourier transform-based technique, the normalization operation, and the decomposition operation.

For example, the ML model is configured to process a limited range of data by applying a pre-processing technique to each of the training input signal and the training processed signal. For example, applying a pre-processing technique to each of the training input signal and the training processed signal can be construed as a data representation transformation. For example, data representation transformation can be especially important when the ML model comprises layers including (e.g., nonlinear) activation functions.

In one or more example methods, the convolutional layer comprises a convolutional-based technique. In one or more example methods, determining the estimate of the training feedback path transfer function comprises determining a first ML processed signal by applying the convolutional-based technique to the first pre-processed signal and the second pre-processed signal. The convolutional layer may be construed as a single layer. The convolutional layer may comprise an activation function. The convolutional layer may not comprise an activation function.

In one or more example methods, the convolutional layer includes a filter (e.g., a kernel) with a given size. For example, the filter comprises a set of weights. In one or more example methods, applying the convolutional-based technique to the first pre-processed signal and the second pre-processed signal comprises applying (e.g., employing) a filter having a given size over time (e.g., a set of frames) and frequency (e.g., a set of frequency bins) to the first pre-processed signal and the second pre-processed signal.

For example, the filter (e.g., a kernel) may have the same number of channels as the input data (e.g., two channels, one for each of the first pre-processed signal and the second pre-processed signal). In other words, the filter may have a size of $2 \times I \times J$, with $I$ denoting the number of rows of the filter (e.g., the set of frames), and $J$ denoting the number of columns of the filter (e.g., the set of frequency bins). A filter having a size of $2 \times I \times J$ may be seen as two filters, such as a first filter and a second filter, each of the first filter and the second filter with a size of $I \times J$, each of the first filter and the second filter to be convoluted with a respective pre-processed signal of the first pre-processed signal and the second pre-processed signal. Each of the two filters may comprise a size that is less than the size of the respective pre-processed signal.

For example, each of the first filter and the second filter is a two-dimensional (2D) filter (e.g., a 2D array of weights). In one or more example methods, applying the convolutional-based technique to the first pre-processed signal and the second pre-processed signal comprises applying a convolutional operation using a two-dimensional (2D) filter to each of the first pre-processed signal and the second pre-processed signal.

For example, applying the convolutional-based technique to the first pre-processed signal and the second pre-processed signal comprises performing a dot product (e.g., an element-wise multiplication) between an array (e.g., a set of elements) of the first pre-processed signal and the first filter, with the array of the first pre-processed signal being a first filter-sized patch of the first pre-processed signal (e.g., having the same size of the first filter). For example, applying the convolutional-based technique to the first pre-processed signal and the second pre-processed signal comprises applying the first filter across the entire size of the first pre-processed signal, such as to a multitude of first filter-sized patches of the first pre-processed signal, for provision of a first filtered signal.

For example, applying the convolutional-based technique to the first pre-processed signal and the second pre-processed signal comprises performing a dot product (e.g., an element-wise multiplication) between an array (e.g., a set of elements) of the second pre-processed signal and the second filter, with the array of the second pre-processed signal being a second filter-sized patch of the second pre-processed signal (e.g., having the same size of the second filter). For example, applying the convolutional-based technique to the first pre-processed signal and the second pre-processed signal comprises applying the second filter across the entire size of the second pre-processed signal, such as to a multitude of second filter-sized patches of the second pre-processed signal, for provision of a second filtered signal.

For example, applying the convolutional-based technique to the first pre-processed signal and the second pre-processed signal comprises summing the first filtered signal with the second filtered signal (e.g., summing over the two channels of the filter with size $2 \times I \times J$).

In one or more example methods, determining the estimate of the training feedback path transfer function comprises determining the first ML processed signal as having the same size of the first pre-processed signal and the size of the second pre-processed signal. For example, determining the first ML processed signal comprises zero padding each of the first pre-processed signal and the second pre-processed signal over time (e.g., the set of frames) and frequency the set of frequency bins. For example, zero-padding each of the first pre-processed signal and the second pre-processed signal ensures that the size of the first ML processed signal is the same as the size of the first pre-processed signal as well as the size of the second pre-processed signal.

Embodiments of the present disclosure may allow provision of a causal system (e.g., which is important in a hearing aid application) by ensuring that the context of each frame comes solely from past frames with proper padding in time dimension (e.g., by padding the beginning of each of the first pre-processed signal and the second pre-processed signal with zeros). For example, context of a frame refers to information contained in the frame (e.g., content of the frame).

In one or more example methods, determining the estimate of the training feedback path transfer function comprises determining a second ML processed signal by concatenating the first ML processed signal with the first pre-processed signal and the second pre-processed signal over frequency. For example, determining the estimate of the training feedback path transfer function comprises determining the second ML processed signal based on the first ML processed signal, the first pre-processed signal and the second pre-processed signal. For example, the second ML processed signal can be seen as a matrix comprising the first ML processed signal (e.g., $\boldsymbol{C}$), the first pre-processed signal (e.g., $\boldsymbol{Y}_{pre}$) and the second pre-processed signal (e.g., $\boldsymbol{U}_{pre}$). For example, the second ML processed signal can be represented by matrix $[\boldsymbol{C}\ \boldsymbol{U}_{pre}\ \boldsymbol{Y}_{pre}] \in R^{M \times 6K}$ or $[\boldsymbol{C}\ \boldsymbol{Y}_{pre}\ \boldsymbol{U}_{pre}] \in R^{M \times 6K}$, such as with a size of $M \times 6K$. For example, the first ML processed signal is concatenated over frequency (e.g., the set of frequency bins) with the first pre-processed signal and the second pre-processed signal. For example, the size of the first ML processed signal (e.g., $\boldsymbol{C}$), the first pre-processed signal (e.g., $\boldsymbol{Y}_{pre}$), and the second pre-processed signal (e.g., $\boldsymbol{U}_{pre}$) is $M \times 2K$. For example, the second ML processed signal can be determined by horizontally concatenating the matrix representing the first ML processed signal (e.g., $\boldsymbol{C}$), the matrix representing the first pre-processed signal (e.g., $\boldsymbol{Y}_{pre}$) and the matrix representing the second pre-processed signal (e.g., $\boldsymbol{U}_{pre}$).

In one or more example methods, the first FC layer comprises a first FC-based technique. In one or more example methods, determining the estimate of the training feedback path transfer function comprises determining a third ML processed signal by applying the first FC-based technique to the second ML processed signal. In one or more example methods, the first FC layer comprises an activation function. The activation function of the first FC layer may be a ReLU-based activation function, such as a leaky ReLU function (e.g., or any other activation function previously provided in the disclosure). The first FC layer may be an FF layer. In one or more example methods, determining the third ML processed signal comprises applying the activation function to the second ML processed signal.

Optionally, determining the estimate of the training feedback path transfer function comprises determining a third ML processed signal by applying the first FC-based technique to the first ML processed signal, the first pre-processed signal, and the second pre-processed signal. For example, the first FC layer is configured to receive as input the first ML processed signal, the first pre-processed signal and the second pre-processed signal. In other words, the first FC layer may be configured to receive as input the second ML processed signal (e.g., comprising the first ML processed signal, the first pre-processed signal and the second pre-processed signal).

For example, the first ML processed signal is a poor estimate of the training feedback transfer function. For example, the first FC layer can provide a better estimate of the training feedback transfer function (e.g., in comparison with the first ML processed signal) when receiving as input the second ML processed signal (e.g., first ML processed signal, the first pre-processed signal and the second pre-processed signal).

In one or more example methods, the LSTM layer comprises an LSTM-based technique. In one or more example methods, determining the estimate of the training feedback path transfer function comprises determining a fourth ML processed signal by applying the LSTM-based technique to the third ML processed signal. In one or more example methods, the fourth ML processed signal is the estimate of the training feedback path transfer function.

The LSTM layer may be construed as a single layer. The LSTM layer may comprise an activation function. The LSTM layer may not comprise an activation function.

In one or more example methods, applying the LSTM-based technique to the third ML processed signal comprises determining a plurality of dependencies between frames. For example, the LSTM layer is configured to exploit (e.g., manage) dependencies (e.g., long-term dependencies) between a set of frames of the third ML processed signal. For example, the fourth ML processed signal comprises a size that is smaller than the size of the second ML processed signal. The fourth ML processed signal may be an output of the ML model.

In one or more example methods, the LSTM layer can be replaced by a GRU layer. For example, an LSTM layer in such layer configuration may be preferable when compared with a GRU layer.

In one or more example methods, the second FC layer comprises a second FC-based technique. In one or more example methods, determining the estimate of the training feedback path transfer function comprises determining a fifth ML processed signal by applying the second FC-based technique to the fourth ML processed signal. In one or more example methods, the fifth ML processed signal is the estimate of the training feedback path transfer function.

In one or more example methods, the second FC layer comprises an activation function. The activation function of the second FC layer may be a ReLU-based activation function, such as a leaky ReLU function (e.g., or any other activation function previously provided in the disclosure). In one or more example methods, determining the fifth ML processed signal comprises applying the activation function to the fourth ML processed signal. The fifth ML processed signal may be an output of the ML model. For example, the fifth ML processed signal is a more accurate estimate of the training feedback path transfer function than the fourth ML processed signal.

A layer configuration with a convolutional layer, a first FC layer, an LSTM layer, and a second FC layer (and respective signal processing), in this order, may allow a faster convergence rate along with lower steady state errors, in turn improving the trade-off between convergence rate and steady-state error.

In one or more example methods, the third FC layer comprises a third FC-based technique. In one or more example methods, determining the estimate of the training feedback path transfer function comprises determining a sixth ML processed signal by applying the third FC-based technique to the fifth ML processed signal. In one or more example methods, the sixth ML processed signal is the estimate of the training feedback path transfer function.

In one or more example methods, the third FC layer comprises an activation function. The activation function of the third FC layer may be a tangent-based activation function, such as a hyperbolic tangent function (e.g., or any other activation function previously provided in the disclosure). In one or more example methods, determining the sixth ML processed signal comprises applying the activation function to the fifth ML processed signal. The sixth ML processed signal may be an output of the ML model.

In one or more example methods, the sixth ML processed signal comprises a proper estimate of the training feedback path transfer function for each frame. In one or more example methods, the sixth ML processed signal can be represented by matrix $h'_m \in R^{M \times P}$, with $P$ denoting a number of coefficients (e.g., taps). For example, the sixth ML processed signal is a more accurate estimate of the training feedback path transfer function than the fifth ML processed signal.

A layer configuration with a convolutional layer, a first FC layer, an LSTM layer, a second FC layer, and a third FC layer (and respective signal processing), in this order, may allow a faster convergence rate along with lower steady state errors, in turn improving the trade-off between convergence rate and steady-state error. For example, the size of the sixth ML processed signal is a moderate size enabling the use of a ML model with a restricted size (e.g., a less complex ML model). For example, such ML model is capable of providing a proper (e.g., an accurate) estimate of the training feedback path transfer function, while guaranteeing computational efficiency.

In one or more example methods, the ML model further comprises a pooling layer. In one or more example methods, the pooling layer comprises a pooling-based technique. In one or more example methods, determining the estimate of the training feedback path transfer function comprises determining a seventh ML processed signal by applying the pooling-based technique to the sixth ML processed signal. In one or more example methods, the seventh ML processed signal is the estimate of the training feedback path transfer function.

In one or more example methods, the first pre-processed signal, the second pre-processed signal, the first ML processed signal, the second ML processed signal, the third ML processed signal, the fourth ML processed signal, the fifth ML processed signal, the sixth ML processed signal are associated with the same number of frames (e.g., time frames, such as $M$ frames),

In one or more example methods, the pooling layer comprises an average pooling layer. For example, applying the pooling-based technique to the sixth ML processed signal comprises performing a moving average across a plurality of frames, such as past and current frames (e.g., $N$ frames). The pooling-based technique may comprise a moving average operation. For example, the pooling layer is used to smooth the sixth ML processed signal, such as the estimate of the training feedback path transfer function. Optionally, the pooling layer can comprise a max pooling layer. The seventh ML processed signal may be an output of the ML model.

In one or more example methods, the seventh ML processed signal can be represented by matrix $\hat{h}_m \in R^{(M-(N-1))\times P}$, with a size of $(M-(N-1)) \times P$. For example, the seventh ML processed signal can be determined as

$$\widehat{h}_m = \frac{\sum_{i=m-N+1}^{m} h'_i}{N}. \qquad (1)$$

Parameter $N$ may be important for controlling a speed of convergence and accuracy of the estimations (e.g., estimation of the training feedback path transfer function). In other words, the value of parameter $N$ may be chosen such that an improvement in the speed of convergence (e.g., convergence to the target data) and accuracy is verified.

The seventh ML processed signal may be a more accurate estimate of the training feedback path transfer function than the sixth ML processed signal.

The seventh ML processed signal may be as accurate as the sixth ML processed signal.

A layer configuration with a convolutional layer, a first FC layer, an LSTM layer, a second FC layer, a third FC layer, and a pooling layer (and respective signal processing), in this order, may allow a faster convergence rate along with lower steady state errors, in turn improving the trade-off between convergence rate and steady-state error.

In one or more example methods, determining the estimate of the training feedback path transfer function comprises providing the first pre-processed signal and the second pre-processed signal as input to the ML model. For example, determining the estimate of the training feedback path transfer function comprises providing the training input signal and the training processed signal as input to the ML model. For example, the ML model is configured to output the estimate of the training feedback path transfer function.

In one or more example methods, updating the ML model comprises determining a training error signal based on the estimate of the training feedback path transfer function and the training feedback path transfer function. In one or more example methods, determining a training error signal comprises determining a loss function (e.g., a cost function) based on the estimate of training feedback path transfer function and the training feedback path transfer function. For example, the loss function can quantify a difference between the estimate of the training feedback path transfer function (e.g., output by the ML model) and the training feedback path transfer function. The training feedback path transfer function (e.g., comprised in the target data) may be construed as a reference (e.g., target) feedback path transfer function. In one or more example method, the training error signal can be indicative of a training loss associated with the ML model. For example, minimization of such training loss (e.g., reducing the training error signal) may indicate a proper (e.g., satisfactory, adequate) estimate of the training feedback path transfer function. In one or more example methods, the loss function can be one or more of: a mean squared error (MSE), a mean absolute error (MAE), a binary cross-entropy (BCE) loss function, a normalized Euclidean system distance (NESD) and any other suitable loss functions. For example, any distance measure between the estimate of training feedback path transfer function and the training feedback path transfer function can be used as a loss function.

In one or more example methods, each training iteration of the plurality of training iterations can comprise determining an estimate of the feedback input signal component based on the estimate of the training feedback path transfer function. In one or more examples, each training iteration of the plurality of training iterations can comprise determining the training feedback corrected input signal based on the training input signal and the estimate of the feedback input signal component (e.g., by subtracting the estimate of the feedback input signal component from the training input signal). In one or more example methods, each training iteration of the plurality of training iterations can comprise determining a target feedback corrected input signal based on the training input signal and the training feedback input signal component. For example, the training feedback input signal component is known as the training feedback path transfer function is also known. For example, the training feedback input signal component may be determined based on the training feedback path transfer function. For example, updating the ML model can comprise determining the training error signal based on the training the feedback corrected input signal and the target feedback corrected input signal. For example, the loss function (e.g., a cost function) can be determined based on the training the feedback corrected input signal and the target feedback corrected input signal.

In one or more example methods, a training loss associated with an NESD loss function can be determined for each frame as,

$$l_m = 10 \log_{10} \frac{\left\| \boldsymbol{h}_m - \widehat{\boldsymbol{h}}_m \right\|^2}{\left\| \boldsymbol{h}_m \right\|^2}, \qquad (2)$$

where $\hat{h}_m$ denotes the estimate of the training feedback path transfer function (e.g., fourth ML processed signal, fifth ML processed signal, sixth ML processed signal, or seventh ML processed signal), and $\boldsymbol{h}_m$ is the training feedback path transfer function (e.g., comprised in the target data). Stated differently, determining the training error signal (e.g., a training loss) may comprise determining an NESD between the training feedback path transfer function and the estimate of the training feedback path transfer function.

In one or more example methods, a training loss (e.g., total training loss) associated with the NESD loss function can be determined as,

$$L = \frac{\sum_{m=N}^{M} l_m}{M}, \qquad (3)$$

where such total training loss averages the training loss for each frame (e.g., $l_m$) across the whole sequence (e.g., excluding the first $N$ - 1 frames), such as the sequence of training losses (e.g., each training loss associated with a frame).

In one or more example methods, updating the ML model comprises updating a plurality of weights, using a learning rule, of the ML model based on the training error signal. For example, the plurality of weights of the ML model may be updated (e.g., adjusted) when the training loss is minimized. For example, the plurality of weights of the ML model may not be updated (e.g., adjusted) when the training loss is not minimized. The updated (e.g., adjusted) weights may be stored in a memory associated with the ML model.

In one or more example methods, updating, using a learning rule, the plurality of weights of the ML model comprises adjusting the plurality of weights upon determining that the training loss is less than or equal to a training loss threshold. In one or more example methods, not updating, using the learning rule, the plurality of weights of the ML model comprises not adjusting the plurality of weights upon determining that the training loss is greater than the training loss threshold.

For example, the method comprises performing a pre-training process and a fine-tuning process. The training stage may comprise a pre-training process and a fine-tuning process. For example, performing the pre-training process comprises performing the method of training (e.g., the steps described previously) during a first set of training iterations of the plurality of training iterations. For example, the ML model is a pre-trained ML model.

For example, the target data associated with the pre-training process is obtained for each of the first set of training iterations. For example, the target data associated with the pre-training process (e.g., used to pre-train the ML model) can comprise a feedback path transfer function determined by computer simulation (e.g., a synthetically generated feedback path transfer function). In other words, the training feedback path transfer function can be a synthetically generated feedback path transfer function. For example, the synthetically generated feedback path transfer function can be seen as a training sequence.

For example, the training data associated with the pre-training process is obtained for each of the first set of training iterations. For example, the training data associated with the pre-training process (e.g., used to pre-train the ML model) can comprise the training input signal (e.g., comprising the external input signal component and the feedback input signal component) and the training processed signal. For example, the external input signal component of the training input signal associated with the pre-training process can be indicative of sound from an acoustic environment simulated by computer simulation. For example, the feedback input signal component of the training input signal associated with the pre-training process can be indicative of a synthetically generated acoustic and/or mechanical feedback (e.g., generated by computer simulation). In other words, generation of such feedback input signal component may be based on the synthetically generated feedback path transfer function. The training data may be determined based on the synthetically generated feedback path transfer function (e.g., impulse response). For example, each of the first set of iterations can comprise generating target data comprising a synthetic feedback path transfer function via computer simulation. For example, each of the first set of iterations can comprise generating training data based on the synthetically generated feedback path transfer function. For example, the training input signal associated with the pre-training process and the training processed signal associated with the pre-training process can be seen as training sequences.

For example, performing the fine-tuning process comprises performing the method of training (e.g., the steps described previously) during a second set of training iterations of the plurality of training iterations. For example, the ML model is a fine-tuned ML model and may be ready to be deployed in a hearing aid for an inference stage.

For example, the target data associated with the fine-tuning process is obtained for each of the second set of training iterations. For example, the target data associated with the fine-tuning process (e.g., used to fine-tune the ML model) can comprise a measured feedback path transfer function, such as associated with a realistic environment (e.g., measured from a hearing aid while or after being used by a user in a real-world environment). In other words, the training feedback path transfer function can be a measured feedback path transfer function. For example, the measured feedback path transfer function can be seen as a training sequence. For example, the training data associated with the fine-tuning process is obtained for each of the second set of training iterations. For example, the training data associated with the fine-tuning process (e.g., used to fine-tune the ML model) can comprise the training input signal (e.g., comprising the external input signal component and the feedback input signal component) and the training processed signal. For example, the external input signal component of the training input signal associated with the fine-tuning process can be indicative of sound from an acoustic environment simulated by computer simulation or sound from an acoustic environment of a hearing aid while being used by a user (e.g., in realistic environments). For example, the feedback input signal component of the training input signal associated with the fine-tuning process can be indicative of a measured acoustic and/or mechanical feedback (e.g., from a real-world environment). In other words, generation of such feedback input signal component may be based on the measured feedback path transfer function. The training data may be determined based on the measured feedback path transfer function (e.g., impulse response). For example, each of the second set of iterations can comprise generating target data comprising a measured feedback path transfer function via computer simulation. For example, each of the second set of iterations can comprise generating training data based on the measured feedback path transfer function. For example, the training input signal associated with the fine-tuning process and the training processed signal associated with the fine-tuning process can be seen as training sequences.

For example, the method comprises training the ML model using measured feedback path transfer functions (e.g., impulse responses of a respective feedback paths associated with realistic acoustic environments) and synthetically generated feedback path transfer functions (e.g., impulse responses of respective feedback paths associated with simulated acoustic environments). Optionally, the method can comprise training the ML model using measured feedback path transfer functions or synthetically generated feedback path transfer functions. The method may comprise training the ML model using training data and target data generated via computer simulation. The method may comprise training the ML model using training data and target data measured from a realistic acoustic environment. The method may comprise training the ML model using training data and target data measured from a realistic acoustic environment mixed with training data and target data generated from a simulated acoustic environment.

In one or more example methods, the method can comprise performing a validation process. The training stage may comprise a pre-training process, a fine-tuning process, and a validation process. For example, performing the validation process comprises performing the method of training (e.g., the steps described previously) during a third set of training iterations of the plurality of training iterations. For example, the ML model is a fine-tuned ML model.

For example, the target data associated with the validation process is obtained for each of the third set of training iterations. For example, the target data associated with the validation process can be termed as validation target data. For example, the validation target data (e.g., used to validate the fine-tuned ML model) can comprise a synthetically generated feedback path transfer function or a measured feedback path transfer function. For example, the synthetically generated feedback path transfer function can be seen as a validation sequence. For example, the measured feedback path transfer function can be seen as a validation sequence.

For example, the training data associated with the validation process (e.g., validation data) is obtained for each of the third set of training iterations. For example, the training data associated with the validation process can be termed as validation data. For example, the validation data (e.g., used to validate the ML model) can comprise a training input signal and a training processed signal. The training input signal associated with the validation process may be termed as validation input signal. The training input signal and the validation process and the validation input signal may be used interchangeably. The training processed signal associated with the validation process may be termed as validation processed signal. The training processed signal associated with the validation process and the validation processed signal may be used interchangeably.

For example, the validation input signal comprises an external input signal component and a feedback input signal component. The external input component associated with the validation process may be termed as validation input signal. The external input component associated with the validation process and the validation external input signal may be used interchangeably. The feedback input signal component associated with the validation process may be termed as validation feedback input signal component. The feedback input signal component associated with the validation process and the validation feedback input signal component may be used interchangeably.

For example, the validation external input signal component can be indicative of sound from an acoustic environment simulated by computer simulation or sound from an acoustic environment of a hearing aid while being used by a user (e.g., in realistic environments). For example, the validation feedback input signal component can be indicative of a measured acoustic and/or mechanical feedback (e.g., from a real-world environment) or synthetically generated acoustic and/or mechanical feedback. For example, each of the third set of iterations can comprise generating the validation data based on the measured feedback path transfer function or the synthetically generated feedback path transfer function. For example, the validation input signal and the validation processed signal can be seen as validation sequences.

In one or more example methods, the method can comprise generating a training data set before executing the plurality of training iterations. For example, the training data set can comprise data from a multitude of computer simulations (e.g., from several known, simulated environments, e.g., from several ideal feedback control systems) and data measured from realistic environments. In other words, the training data set may comprise a multitude of training input signals and a multitude of training processed signals. The training data to be used per each training iteration may be obtained from such generated training data set. For example, the training data set can comprise a set of training sequences and a set of validation sequences.

In one or more example methods, the method can comprise generating a target data set before executing the plurality of training iterations. For example, the target data set can comprise data from a multitude of computer simulations (e.g., from several known, simulated environments, e.g., from several ideal feedback control systems). In other words, the target data set may comprise a multitude of training feedback path transfer functions (e.g., a multitude of measured training feedback path transfer functions and/or a multitude of synthetically generated training feedback path transfer functions). The target data to be used per each training iteration may be obtained from such generated target data set. For example, the target data set can comprise a set of pre-training sequences and a set of validation sequences.

A hearing aid:

A hearing aid comprising an input unit, a signal processing unit, and an output unit.

The input unit is configured to provide an electric input signal representing a sound in an environment of a user of the hearing aid. The electric input signal comprises an external input signal component and a feedback input signal component. The external input signal component is indicative of the sound in the environment of the hearing aid. The feedback input signal component is indicative of acoustic and/or mechanical feedback originating from a feedback path from an output unit of the hearing aid to the input unit of the hearing aid.

The signal processing unit is configured to provide a processed signal by applying one or more processing algorithms to a feedback corrected input signal. The feedback corrected input signal is indicative of a feedback corrected version of the electric input signal.

The output unit is configured to output, based on the processed signal, an audible signal to the user of the hearing aid.

The hearing aid (e.g., further) comprises a feedback control system including a trained machine learning (ML) model. The feedback control system is configured to determine an estimate of the feedback input signal component based on an estimate of a feedback path transfer function. The feedback path transfer function is representative of an impulse response of the feedback path. The trained ML model is configured to provide the estimate of the feedback path transfer function based on the electric input signal and the processed signal. The ML model is trained according to the method disclosed herein. The feedback control system is configured to determine the feedback corrected input signal based on the electric input signal and the estimate of the feedback input signal component.

Thereby an improved hearing aid may be provided.

Embodiments of the present disclosure can provide a hearing aid with improved signal quality and signal intelligibility as the trained ML model is configured to determine (e.g., provide) an estimate of the training feedback path transfer function (e.g., of the impulse response of the feedback path), thereby allowing post-processing of such estimate. Post-processing of such estimate can advantageously enable removal of artifacts that can result from non-optimal predictions by the ML model, in turn increasing signal quality and signal intelligibility. In other words, embodiments of the present disclosure may provide for method for training an ML model to estimate a feedback impulse response, instead of directly estimating the feedback correct input signal (e.g., offering an alternative to conventional adaptive filtering techniques and existing ML techniques). The estimate of the training feedback path transfer function may comprise imperfections caused by such non-optimal predictions which can be either removed from the training feedback path transfer function in the post-processing or kept when such imperfections are negligible (e.g., minor).

In one or more example hearing aids, the hearing aid is configured to provide a frequency dependent gain and/or a level dependent compression and/or a transposition (with or without frequency compression) of one or more frequency ranges to one or more other frequency ranges, e.g., to compensate for a hearing impairment of a user. For example, such frequency dependent gain and/or a level dependent compression and/or a transposition may be provided by the one or more processing algorithms and/or a frequency- and/or level-dependent gain function. For example, the signal processing unit is configured to enhance the feedback corrected input signal, and provide the processed signal.

In one or more example hearing aids, the output unit is configured to provide (e.g., generate) a stimulus perceived by the user as an acoustic signal (e.g., as sound) based on the processed signal. The output unit may a vibrator of a bone conducting hearing aid. The output unit may comprise an output transducer. The output transducer may comprise a receiver (e.g., a loudspeaker) configured to provide the stimulus as an acoustic signal to the user (e.g., in an acoustic (air conduction based) hearing aid). The output transducer may comprise a vibrator for providing the stimulus as mechanical vibration of a skull bone to the user (e.g., in a bone-attached or bone-anchored hearing aid). The output unit may (additionally or alternatively) comprise a (e.g., wireless) transmitter for transmitting sound picked up-by the hearing aid to another device, e.g. a far-end communication partner (e.g., via a network, e.g., in a telephone mode of operation).

In one or more example hearing aids, the input unit can comprise an input transducer (e.g., a microphone) configured to convert an input sound (e.g., sound in the environment of the user of the hearing aid) to the electric input signal. The input unit may comprise a wireless receiver configured to receive a wireless signal representing sound in the environment of the user of the hearing aid, and provide the electric input signal representing said sound.

In one or more example hearing aids, the wireless receiver and/or transmitter can be configured to receive and/or transmit an electromagnetic signal in the radio frequency range (e.g., 3 kHz to 300 GHz). In one or more example hearing aids, the wireless receiver and/or transmitter can be configured to receive and/or transmit an electromagnetic signal in a frequency range of light (e.g. infrared light 300 GHz to 430 THz, or visible light, e.g. 430 THz to 770 THz).

In one or more example hearing aids, the hearing aid may comprise a directional microphone system adapted to spatially filter sounds from the environment, and thereby enhance a target acoustic source among a multitude of acoustic sources in the local environment of the user wearing the hearing aid. The directional system may be adapted to detect (such as adaptively detect) from which direction a particular part of the microphone signal originates. This can be achieved in various different ways as e.g. described in the prior art. In hearing aids, a microphone array beamformer is often used for spatially attenuating background noise sources. The beamformer may comprise a linear constraint minimum variance (LCMV) beamformer. Many beamformer variants can be found in literature. The minimum variance distortionless response (MVDR) beamformer is widely used in microphone array signal processing. Ideally the MVDR beamformer keeps the signals from the target direction (also referred to as the look direction) unchanged, while attenuating sound signals from other directions maximally. The generalized sidelobe canceller (GSC) structure is an equivalent representation of the MVDR beamformer offering computational and numerical advantages over a direct implementation in its original form.

Most sound signal sources (except the user's own voice) are located far way from the user compared to dimensions of the hearing aid, e.g. a distance $d_{mic}$ between two microphones of a directional system. A typical microphone distance in a hearing aid is of the order 10 mm. A *minimum* distance of a sound source of interest to the user (e.g. sound from the user's mouth or sound from an audio delivery device) is of the order of 0.1 m (> 10 $d_{mic}$). For such minimum distances, the hearing aid (microphones) would be in the acoustic near-field of the sound source and a difference in level of the sound signals impinging on respective microphones may be significant. A *typical* distance for a communication partner is more than 1 m (>100 $d_{mic}$). The hearing aid (microphones) would be in the acoustic far-field of the sound source and a difference in level of the sound signals impinging on respective microphones is insignificant. The difference in *time of arrival* of sound impinging in the direction of the microphone axis (e.g. the front or back of a normal hearing aid) is $\Delta T = d_{mic}/v_{sound} = 0.01/343$ [s] $= 29$ $\mu$s, where $V_{sound}$ is the speed of sound in air at 20°C (343 m/s).

The hearing aid may comprise antenna and transceiver circuitry allowing a wireless link to an entertainment device (e.g., a TV-set), a communication device (e.g., a telephone), a wireless microphone, a separate (external) processing device, or another hearing aid, etc. The hearing aid may thus be configured to wirelessly receive a direct electric input signal from another device. Likewise, the hearing aid may be configured to wirelessly transmit a direct electric output signal to another device. The direct electric input or output signal may represent or comprise an audio signal and/or a control signal and/or an information signal.

In general, a wireless link established by antenna and transceiver circuitry of the hearing aid can be of any type. The wireless link may be a link based on near-field communication, e.g. an inductive link based on an inductive coupling between antenna coils of transmitter and receiver parts. The wireless link may be based on far-field, electromagnetic radiation. Preferably, frequencies used to establish a communication link between the hearing aid and the other device is below 70 GHz, e.g. located in a range from 50 MHz to 70 GHz, e.g. above 300 MHz, e.g. in an ISM range above 300 MHz, e.g. in the 900 MHz range or in the 2.4 GHz range or in the 5.8 GHz range or in the 60 GHz range (ISM=Industrial, Scientific and Medical, such standardized ranges being e.g. defined by the International Telecommunication Union, ITU). The wireless link may be based on a standardized or proprietary technology. The wireless link may be based on Bluetooth technology (e.g. Bluetooth Low-Energy technology, e.g. LE audio), or Ultra- (UWB) technology.

The hearing aid may be constituted by or form part of a portable (i.e. configured to be wearable) device, e.g. a device comprising a local energy source, e.g. a battery, e.g. a rechargeable battery. The hearing aid may e.g. be a low weight, easily wearable, device, e.g. having a total weight less than 100 g, such as less than 20 g, such as less than 5 g.

The hearing aid may comprise a "forward" (or 'signal') path for processing an audio signal between an input and an output of the hearing aid. The signal processing unit may be located in the forward path. The signal processing unit may be configured to provide a frequency dependent gain according to a user's particular needs (e.g., hearing impairment). The hearing aid may comprise an 'analysis' path comprising functional components for analyzing signals and/or controlling processing of the forward path. Some or all signal processing of the analysis path and/or the forward path may be conducted in the frequency domain, in which case the hearing aid comprises appropriate analysis and synthesis filter banks. Some or all signal processing of the analysis path and/or the forward path may be conducted in the time domain.

An analogue electric signal representing an acoustic signal may be converted to a digital audio signal in an analogue-to-digital (AD) conversion process, where the analogue signal is sampled with a predefined sampling frequency or rate $f_s$, $f_s$ being e.g. in the range from 8 kHz to 48 kHz (adapted to the particular needs of the application) to provide digital samples $x_n$ (or $x[n]$) at discrete points in time $t_n$ (or $n$), each audio sample representing the value of the acoustic signal at $t_n$ by a predefined number $N_b$ of bits, $N_b$ being e.g. in the range from 1 to 48 bits, e.g. 24 bits. Each audio sample is hence quantized using $N_b$ bits (resulting in $2^{N_b}$ different possible values of the audio sample). A digital sample $x$ has a length in time of $1/f_s$, e.g. 50 $\mu$s, for $f_s$ = 20 kHz. A number of audio samples may be arranged in a time frame. A time frame may comprise 64 or 128 audio data samples. Other frame lengths may be used depending on the practical application.

The hearing aid may comprise an analogue-to-digital (AD) converter to digitize an analogue input (e.g. from an input transducer, such as a microphone) with a predefined sampling rate, e.g., 20 kHz. The hearing aids may comprise a digital-to-analogue (DA) converter to convert a digital signal to an analogue output signal, e.g. for being presented to a user via an output transducer.

The hearing aid, e.g. the input unit, and or the antenna and transceiver circuitry may comprise a transform unit for converting a time domain signal to a signal in the transform domain (e.g. frequency domain or Laplace domain, Z transform, wavelet transform, etc.). The transform unit may be constituted by or comprise a TF-conversion unit for providing a time-frequency representation of an input signal. The time-frequency representation may comprise an array or map of corresponding complex or real values of the signal in question in a particular time and frequency range. The TF conversion unit may comprise a filter bank for filtering a (time varying) input signal and providing a number of (time varying) output signals each comprising a distinct frequency range of the input signal. The TF conversion unit may comprise a Fourier transformation unit (e.g. a Discrete Fourier Transform (DFT) algorithm, or a Short Time Fourier Transform (STFT) algorithm, or similar) for converting a time variant input signal to a (time variant) signal in the (time-)frequency domain. The frequency range considered by the hearing aid from a minimum frequency $f_{min}$ to a maximum frequency $f_{max}$ may comprise a part of the typical human audible frequency range from 20 Hz to 20 kHz, e.g. a part of the range from 20 Hz to 12 kHz. Typically, a sample rate $f_s$ is larger than or equal to twice the maximum frequency $f_{max}$, $f_s \geq 2f_{max}$. A signal of the forward and/or analysis path of the hearing aid may be split into a number $Nl$ of frequency bands (e.g. of uniform width), where $Nl$ is e.g. larger than 5, such as larger than 10, such as larger than 50, such as larger than 100, such as larger than 500, at least some of which are processed individually. The hearing aid may be adapted to process a signal of the forward and/or analysis path in a number $NP$ of different frequency channels ($NP \leq Nl$). The frequency channels may be uniform or non-uniform in width (e.g. increasing in width with frequency), overlapping or non-overlapping.

In one or more example hearing aids, the hearing aid comprises an analysis filter bank (e.g., at least one analysis filter bank) configured to provide the electric input signal (e.g., at least one electric input signal) in a time-frequency domain representation. Signal processing of the forward path from the (e.g., at least one) input transducer to the output transducer may be performed in the time-frequency domain ($m, k$), where m denotes a time (frame) index and $k$ denotes a frequency bin (e.g., index). The analysis filter bank may comprise a Fourier transform-based technique, e.g., a STFT algorithm.

The hearing aid may be configured to operate in different modes, e.g. a normal mode and one or more specific modes, e.g. selectable by a user, or automatically selectable. A mode of operation may be optimized to a specific acoustic situation or environment, e.g., a communication mode, such as a telephone mode. A mode of operation may include a low-power mode, where functionality of the hearing aid is reduced (e.g., to save power), e.g., to disable wireless communication, and/or to disable specific features of the hearing aid.

The hearing aid may comprise a number of detectors configured to provide status signals relating to a current physical environment of the hearing aid (e.g., the current acoustic environment), and/or to a current state of the user wearing the hearing aid, and/or to a current state or mode of operation of the hearing aid. Alternatively or additionally, one or more detectors may form part of an *external* device in communication (e.g., wirelessly) with the hearing aid. An external device may e.g. comprise another hearing aid, a remote control, and audio delivery device, a telephone (e.g., a smartphone), an external sensor, etc.

One or more of the number of detectors may operate on the full band signal (time domain). One or more of the number of detectors may operate on band split signals ((time-) frequency domain), e.g. in a limited number of frequency bands.

The number of detectors may comprise a level detector for estimating a current level of a signal of the forward path. The detector may be configured to decide whether the current level of a signal of the forward path is above or below a given (L-)threshold value. The level detector operates on the full band signal (time domain). The level detector operates on band split signals ((time-) frequency domain).

The hearing aid may comprise a voice activity detector (VAD) for estimating whether or not (or with what probability) an input signal comprises a voice signal (at a given point in time).

A voice signal may in the present context be taken to include a speech signal from a human being. It may also include other forms of utterances generated by the human speech system (e.g., singing). The voice activity detector unit may be adapted to classify a current acoustic environment of the user as a VOICE or NO-VOICE environment. This has the advantage that time segments of the electric microphone signal comprising human utterances (e.g., speech) in the user's environment can be identified, and thus separated from time segments only (or mainly) comprising other sound sources (e.g. artificially generated noise). The voice activity detector may be adapted to detect as a VOICE also the user's own voice. Alternatively, the voice activity detector may be adapted to exclude a user's own voice from the detection of a VOICE.

The hearing aid may comprise an own voice detector for estimating whether or not (or with what probability) a given input sound (e.g., a voice, e.g. speech) originates from the voice of the user of the system. A microphone system of the hearing aid may be adapted to be able to differentiate between a user's own voice and another person's voice and possibly from NON-voice sounds.

The number of detectors may comprise a movement detector, e.g. an acceleration sensor. The movement detector may be configured to detect movement of the user's facial muscles and/or bones, e.g., due to speech or chewing (e.g., jaw movement) and to provide a detector signal indicative thereof.

The hearing aid may comprise a classification unit configured to classify the current situation based on input signals from (at least some of) the detectors, and possibly other inputs as well. In the present context 'a current situation' may be taken to be defined by one or more of

a) the physical environment (e.g. including the current electromagnetic environment, e.g. the occurrence of electromagnetic signals (e.g. comprising audio and/or control signals) intended or not intended for reception by the hearing aid, or other properties of the current environment than acoustic);
b) the current acoustic situation (input level, feedback, etc.), and
c) the current mode or state of the user (movement, temperature, cognitive load, etc.);
d) the current mode or state of the hearing aid (program selected, time elapsed since last user interaction, etc.) and/or of another device in communication with the hearing aid.

The classification unit may be based on or comprise a neural network, e.g. a recurrent neural network, e.g., a trained neural network.

The feedback control system may be seen as an acoustic (and/or mechanical) feedback control (e.g. suppression) or echo-cancelling system. Acoustic (and/or mechanical) feedback originating from the feedback path of the hearing aid may be seen as feedback sound (e.g., indicate by the feedback input signal component) generated by the output transducer (e.g., the loudspeaker) and leaked to the input transducer (e.g., the microphone) via the feedback path.

The hearing aid may further comprise other relevant functionality for the application in question, e.g. compression, noise reduction, etc.

The hearing aid may comprise a hearing instrument, e.g. a hearing instrument adapted for being located at the ear or fully or partially in the ear canal of a user.

Use:

In an aspect, use of a hearing aid as described above, in the 'detailed description of embodiments' and in the claims, is moreover provided. Use may be provided in a system comprising one or more hearing aids (e.g. hearing instruments).

A computer readable medium or data carrier:

In an aspect, a tangible computer-readable medium (a data carrier) storing a computer program comprising program code means (instructions) for causing a data processing system (a computer) to perform (carry out) at least some (such as a majority or all) of the (steps of the) method described above, in the 'detailed description of embodiments' and in the claims, when said computer program is executed on the data processing system is furthermore provided by the present application.

By way of example, and not limitation, such computer-readable media can comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Disk and disc, as used herein, includes compact disc (CD), laser disc, optical disc, digital versatile disc (DVD), floppy disk and Blu-ray disc where disks usually reproduce data magnetically, while discs reproduce data optically with lasers. Other storage media include storage in DNA (e.g. in synthesized DNA strands). Combinations of the above should also be included within the scope of computer-readable media. In addition to being stored on a tangible medium, the computer program can also be transmitted via a transmission medium such as a wired or wireless link or a network, e.g. the Internet, and loaded into a data processing system for being executed at a location different from that of the tangible medium.

## A computer program:

A computer program (product) comprising instructions which, when the program is executed by a computer, cause the computer to carry out (steps of) the method described above, in the 'detailed description of embodiments' and in the claims is furthermore provided by the present application.

## A data processing system:

In an aspect, a data processing system comprising a processor and program code means for causing the processor to perform at least some (such as a majority or all) of the steps of the method described above, in the 'detailed description of embodiments' and in the claims is furthermore provided by the present application.

## A hearing system:

In a further aspect, a hearing system comprising a hearing aid as described above, in the 'detailed description of embodiments', and in the claims, AND an auxiliary device is moreover provided.
The hearing system may be adapted to establish a communication link between the hearing aid and the auxiliary device to provide that information (e.g. control and status signals, possibly audio signals) can be exchanged or forwarded from one to the other.
The auxiliary device may be constituted by or comprise a remote control, a smartphone, or other portable or wearable electronic device, such as a smartwatch or the like.
The auxiliary device may be constituted by or comprise a remote control for controlling functionality and operation of the hearing aid(s). The function of a remote control may be implemented in a smartphone, the smartphone possibly running an APP allowing to control the functionality of the audio processing device via the smartphone (the hearing aid(s) comprising an appropriate wireless interface to the smartphone, e.g. based on Bluetooth or some other standardized or proprietary scheme).
The auxiliary device may be constituted by or comprise an audio gateway device adapted for receiving a multitude of audio signals (e.g. from an entertainment device, e.g., a TV or a music player, a telephone apparatus, e.g. a mobile telephone or a computer, e.g., a PC, a wireless microphone, etc.) and adapted for selecting and/or combining an appropriate one of the received audio signals (or combination of signals) for transmission to the hearing aid.
The auxiliary device may be constituted by or comprise another hearing aid. The hearing system may comprise two hearing aids adapted to implement a binaural hearing system, e.g., a binaural hearing aid system.

## An APP:

In a further aspect, a non-transitory application, termed an APP, is furthermore provided by the present disclosure. The APP comprises executable instructions configured to be executed on an auxiliary device to implement a user interface for a hearing aid or a hearing system described above in the 'detailed description of embodiments', and in the claims. The APP may be configured to run on cellular phone, e.g. a smartphone, or on another portable device allowing communication with said hearing aid or said hearing system.

## Definitions:

In the present context, a hearing aid, e.g. a hearing instrument, refers to a device, which is adapted to improve, augment and/or protect the hearing capability of a user by receiving acoustic signals from the user's surroundings, generating corresponding audio signals, possibly modifying the audio signals and providing the possibly modified audio signals as audible signals to at least one of the user's ears. Such audible signals may e.g. be provided in the form of acoustic signals radiated into the user's outer ears and/or acoustic signals transferred as mechanical vibrations to the user's inner ears through the bone structure of the user's head and/or through parts of the middle ear.
The hearing aid may be configured to be worn in any known way, e.g. as a unit arranged behind the ear with a tube leading radiated acoustic signals into the ear canal or with an output transducer, e.g. a loudspeaker, arranged close to or in the ear canal, as a unit entirely or partly arranged in the pinna and/or in the ear canal, as a unit, e.g. a vibrator, attached to a fixture implanted into the skull bone, etc. The hearing aid may comprise a single unit or several units communicating (e.g. acoustically, electrically or optically) with each other. The loudspeaker may be arranged in a housing together with other components of the hearing aid, or may be an external unit in itself (possibly in combination with a flexible guiding element, e.g. a dome-like element).

A hearing aid may be adapted to a particular user's needs, e.g. a hearing impairment. A configurable signal processing circuit of the hearing aid may be adapted to apply a frequency and level dependent compressive amplification of an input signal. A customized frequency and level dependent gain (amplification or compression) may be determined in a fitting process by a fitting system based on a user's hearing data, e.g. an audiogram, using a fitting rationale (e.g. adapted to speech). The frequency and level dependent gain may e.g. be embodied in processing parameters, e.g. uploaded to the hearing aid via an interface to a programming device (fitting system), and used by a processing algorithm executed by the configurable signal processing circuit of the hearing aid.

A 'hearing system' refers to a system comprising one or two hearing aids, and a 'binaural hearing system' refers to a system comprising two hearing aids and being adapted to cooperatively provide audible signals to both of the user's ears. Hearing systems or binaural hearing systems may further comprise one or more 'auxiliary devices', which communicate with the hearing aid(s) and affect and/or benefit from the function of the hearing aid(s). Such auxiliary devices may include at least one of a remote control, a remote microphone, an audio gateway device, an entertainment device, e.g. a music player, a wireless communication device, e.g. a mobile phone (such as a smartphone) or a tablet or another device, e.g. comprising a graphical interface. Hearing aids, hearing systems or binaural hearing systems may e.g. be used for compensating for a hearing-impaired person's loss of hearing capability, augmenting or protecting a normal-hearing person's hearing capability and/or conveying electronic audio signals to a person. Hearing aids or hearing systems may e.g. form part of or interact with public-address systems, active ear protection systems, handsfree telephone systems, car audio systems, entertainment (e.g. TV, music playing or karaoke) systems, teleconferencing systems, classroom amplification systems, etc.

The invention is set out in the appended set of claims.

BRIEF DESCRIPTION OF DRAWINGS

The aspects of the disclosure may be best understood from the following detailed description taken in conjunction with the accompanying figures. The figures are schematic and simplified for clarity, and they just show details to improve the understanding of the claims, while other details are left out. Throughout, the same reference numerals are used for identical or corresponding parts. The individual features of each aspect may each be combined with any or all features of the other aspects. These and other aspects, features and/or technical effect will be apparent from and elucidated with reference to the illustrations described hereinafter in which:

FIG. 1 schematically illustrates an example hearing aid comprising a feedback cancellation system using an adaptive filter,

FIG. 2 schematically illustrates an example hearing aid according to the disclosure,

FIG. 3 shows a flow-chart illustrating an example method, performed by a hearing aid, for determining an estimate of a feedback path transfer function according to the present disclosure,

FIGS. 4A-4B schematically illustrate an example training structure of a ML model according to the present disclosure,

FIG. 5 shows a flow-chart illustrating an example method for training a ML model for use in a feedback control system of a hearing aid according to the present disclosure,

FIG. 6 is a block diagram illustrating an example electronic device according to this disclosure,

FIG. 7 illustrates example impulse responses of a feedback path of a hearing aid according to the disclosure,

FIG. 8 shows a Table illustrating an example configuration for each layer of a ML model according to the disclosure,

FIG. 9 shows a graph illustrating an example training loss according to the disclosure, and

FIG. 10 shows a Table illustrating example mean value and standard deviation values for a ML-based feedback control system comprising a trained ML model according to the present disclosure.

The figures are schematic and simplified for clarity, and they just show details which are essential to the understanding of the disclosure, while other details are left out. Throughout, the same reference signs are used for identical or corresponding parts.

Further scope of applicability of the present disclosure will become apparent from the detailed description given hereinafter. However, it should be understood that the detailed description and specific examples, while indicating preferred embodiments of the disclosure, are given by way of illustration only. Other embodiments may become apparent to those skilled in the art from the following detailed description.

DETAILED DESCRIPTION OF EMBODIMENTS

The detailed description set forth below in connection with the appended drawings is intended as a description of various configurations. The detailed description includes specific details for the purpose of providing a thorough understanding of various concepts. However, it will be apparent to those skilled in the art that these concepts may be practiced without these specific details. Several aspects of the apparatus and methods are described by various blocks, functional units, modules, components, circuits, steps, processes, algorithms, etc. (collectively referred to as "elements"). Depending upon particular application, design constraints or other reasons, these elements may be implemented using electronic hardware, computer program, or any combination thereof.

The electronic hardware may include microelectronic-mechanical systems (MEMS), integrated circuits (e.g. application specific), microprocessors, microcontrollers, digital signal processors (DSPs), field programmable gate arrays (FPGAs), programmable logic devices (PLDs), gated logic, discrete hardware circuits, printed circuit boards (PCB) (e.g. flexible PCBs), and other suitable hardware configured to perform the various functionality described throughout this disclosure, e.g. sensors, e.g. for sensing and/or registering physical properties of the environment, the device, the user, etc. Computer program shall be construed broadly to mean instructions, instruction sets, code, code segments, program code, programs, subprograms, software modules, applications, software applications, software packages, routines, subroutines, objects, executables, threads of execution, procedures, functions, etc., whether referred to as software, firmware, middleware, microcode, hardware description language, or otherwise.

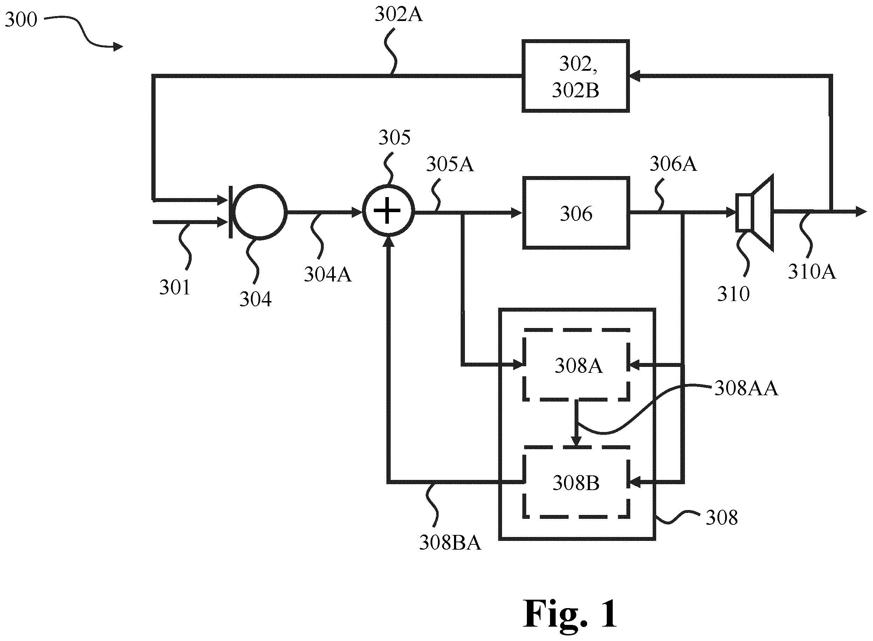

FIG. 1 schematically illustrates an example hearing aid 300 according to the disclosure. The hearing aid 300 comprises a feedback control system 308 (e.g., a feedback cancellation system). FIG. 1 illustrates a feedback cancellation system 308 using an adaptive filter.

The hearing aid 300 comprises a forward path and a feedback path 302. For example, the feedback path 302 may comprise an impulse response represented by a feedback path transfer function 302B (e.g., denoted as $h(n) = [h_1(n), h_2(n), ..., h_L(n)]^T$, with $L$ denoting a length of an impulse response of the feedback path and n denoting a (e.g., discrete) time index. For example, the feedback path transfer function 302B can be seen as a time variant transfer function of the feedback path.

The forward path comprises an input unit (e.g., an input transducer 304, such as a microphone) configured to provide (e.g., pick up) an electric input signal 304A representing sound in an environment of a user of the hearing aid 300. In other words, the microphone (e.g., an input transducer) may be configured to obtain (e.g., pick up) sound from the environment of the hearing aid 300 and provide the electric input signal 304A representative of the sound.

The electric input signal 304A (e.g., $y(n) = x(n) + v(n)$) comprises an external input signal component 301 (e.g., $x(n)$) and a feedback input signal component 302A (e.g., $v(n)$, where n denotes a time index). The external input signal component 301 is indicative (e.g., representative) of the sound in the environment of the hearing aid 300. The feedback input signal component 302A is indicative of acoustic and/or mechanical feedback originating from the feedback path 302, the feedback path 302 from an output unit (e.g., an output transducer 310) to the input unit (e.g., the input transducer 304) of the hearing aid 300.

The forward path comprises a signal processing unit 306 configured to provide a processed signal 306A by applying one or more processing algorithms 306 to a feedback corrected input signal 305A. Optionally, the signal processing unit 306 may be configured to provide a processed signal 306A by applying a frequency- and/or level-dependent gain function (e.g., denoted as $g(n)$, where $n$ denotes a time index) to the feedback corrected input signal 305A (e.g., denoted as $e(n)$, where $n$ denotes a time index). For example, the frequency- and/or level-dependent gain function can be seen as a time variant transfer function of the forward path. The frequency- and/or level-dependent gain function may be indicative of an impulse response of the forward path of the hearing aid 300.

In one or more example hearing aids, each of the frequency- and/or level-dependent gain function and the feedback path transfer function 302B is a vector. Each of frequency- and/or level-dependent gain function and the feedback path transfer function 302B may comprise a plurality of elements (e.g., $L$ elements), each of the plurality of elements representing a reaction over time to an external change (e.g., a reaction to an impulse). For example, each element of the plurality of elements can be construed as a samples of the impulse response at the time index $n$.

For example, in a dynamic feedback situation (e.g., with dynamic feedback path changes), the impulse response of each of the frequency- and/or level-dependent gain function and the feedback path transfer function 302B may change over time (e.g., so that the impulse response depends on the time index n). For example, in a static feedback situation, the impulse response of each of the frequency- and/or level-dependent gain function and the feedback path transfer function 302B may remain constant, the impulse response of each of the frequency- and/or level-dependent gain function and the feedback path transfer function 302B being independent of the time index n.

The forward path comprises an output unit configured to output, based on the processed signal 306A, an audible signal 310A to the user of the hearing aid. The processed signal 306A may be converted into an acoustic signal via the output transducer 310 (e.g., a loudspeaker). In other words, the output transducer 310 may be configured to provide, based on the processed signal 306A, stimuli perceivable by the user as sound.

In one or more example hearing aids, the feedback control system 308 may be implemented as an adaptive filter. For example, an adaptive filter is configured to model a true and practically unknown feedback path (e.g., feedback path 302, such as represented by the feedback path transfer function 302B). The feedback control system 308 is configured to provide an estimate 308BA of the feedback input signal component 302A based on an estimate 308AA of the feedback path transfer function 302B. For example, the estimate 308BA of the feedback input signal component 302A can be indicative of (e.g., comprise) the estimate 308AA of the feedback path transfer function 302B. For example, the feedback control system 308 is configured to estimate the impulse response of the feedback path 302. The estimate 308AA of the feedback path transfer function 302B may be given by $\hat{h}(n) = [\hat{h}_1(n), \hat{h}_2(n), \ldots, \hat{h}_L(n)]^T$, with $L$ denoting a length of an impulse response of the feedback path and n denoting a (e.g., discrete) time index.

For example, the feedback control system 308 comprises an adaptive algorithm 308A (e.g., a least mean squares (LMS) estimation algorithm) and a variable filter 308B (e.g., a time-varying filter). For example, the adaptive algorithm 308A is configured to determine the estimate 308AA of the feedback path transfer function 302B based on the feedback corrected input signal 305A and the processed signal 306A. For example, the adaptive algorithm 308A is configured to provide the estimate 308AA of the feedback path transfer function 302B to the variable filter 308B. For example, the adaptive algorithm 308A is configured to provide the estimate 308AA of the feedback path transfer function 302B in form of a plurality of filtering coefficients (e.g., $\hat{h}_1(n)$, $\hat{h}_2(n)$, $\ldots$, $\hat{h}_L(n)$, such as $L$ filtering coefficients). For example, the adaptive algorithm 308A is configured to repeatedly determine the estimate 308AA of the feedback path transfer function 302B (e.g., the plurality of filtering coefficients), such as for several feedback changes that may happen while the hearing aid 300 is being used by the user.

For example, the variable filter 308B is configured to provide the estimate 308BA of the feedback input signal component 302A based on the estimate 308AA of the feedback path transfer function 302B and the processed signal 306A. In other words, the variable filter 308B may be configured to determine the estimate 308BA of the feedback input signal component 302A by filtering the processed signal 306A using the plurality of filtering coefficients.

In one or more example hearing aids, the feedback control system 308 is configured to determine the feedback corrected input signal 305A based on the electric input signal 304A and the estimate 308BA of the feedback input signal component 302A. In other words, the feedback control system may comprise a combination unit 305 (e.g., a summation unit) configured to combine the electric input signal 304A and the estimate 308BA of the feedback input signal component 302A. For example, the combination unit 305 is configured to determine the feedback corrected input signal 305A by subtracting the estimate 308BA of the feedback input signal component 302A from the electric input signal 304A (e.g., $e(n) = y(n) - \hat{v}(n)$). The feedback corrected input signal 305A (e.g., $e(n)$) may be construed as an estimate of the external input signal component 301 (e.g., $x(n)$).

For example, the feedback control system 308 is implemented as an adaptive filter, such as employs a conventional adaptive filtering technique. For example, the adaptive algorithm 308A can determine (e.g., continuously update) the estimate 308BB of the feedback path transfer function 302B using a step-size parameter. Selection of such step-size parameter may be a challenging task (e.g., requiring extensive and thorough analysis) as the step-size parameter controls convergence (e.g., speed of convergence), robustness, and steady state (e.g., estimation error in a steady state) performance of the adaptive algorithm 308A.

In other words, although conventional adaptive filtering techniques can determine an estimate of a feedback transfer function, such techniques may not be able to provide an accurate modelling of the acoustic and/or mechanical feedback path as well as a fast reaction to acoustic feedback path changes (e.g., less than a few hundred milliseconds to maintain stability in a hearing aid setting) as required in realistic environments (e.g., in a real-world condition). A limitation of the conventional adaptive filtering techniques is that it is difficult to ensure a satisfactory trade-off between convergence rate and steady-state behavior, particularly in realistic environments.

Embodiments of the present disclosure provide a ML-based feedback control system for feedback impulse response prediction (e.g., estimation), thereby offering an alternative to conventional adaptive filtering techniques. Such ML-based feedback control system can advantageously achieve, when compared to the conventional adaptive filtering techniques, a faster convergence rate along with lower steady state errors, in turn improving the trade-off between convergence rate and steady-state error. In other words, embodiments of the present disclosure can allow for a faster and more robust (e.g., accurate) estimation of the feedback path transfer function, making such ML-based feedback control system viable to be used in real-world environments. For example, the ML-based feedback control system provided by the present disclosure does not use step-size control for controlling convergence, robustness, and steady state error (e.g., as used by the conventional adaptive filtering techniques).

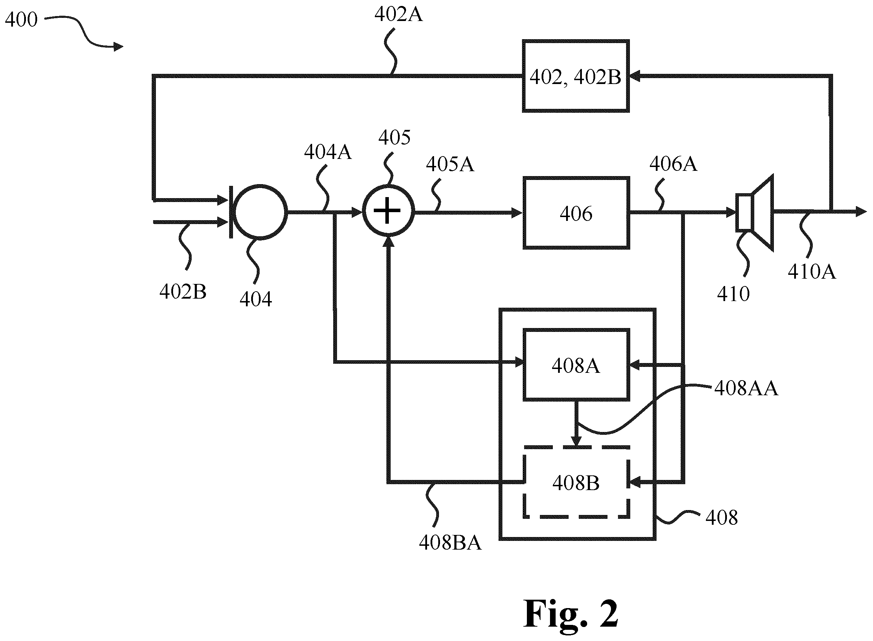

FIG. 2 schematically illustrates an example hearing aid 400 according to the disclosure. The hearing aid 400 comprises a feedback control system 408 (e.g., a feedback cancellation system). FIG. 2 illustrates a feedback cancellation system 408 using a trained ML model 408A. The feedback cancellation system 408 comprises the trained ML model 408A. For example, the feedback control system 408 is a ML-based feedback control system. For example, the trained ML model can replace the adaptive algorithm 308A of FIG. 1.

The hearing aid 400 comprises a forward path and a feedback path 402. For example, the feedback path 402 may comprise an impulse response represented by a feedback path transfer function 402B (e.g., denoted as $h(n) = [h_1(n), h_2(n), ... , h_L(n)]^T$, with $L$ denoting a length of an impulse response of the feedback path and n denoting a (e.g., discrete) time index. For example, the feedback path transfer function 402B can be seen as a time variant transfer function of the feedback path.

The forward path comprises an input unit (e.g., an input transducer 404, such as a microphone) configured to provide (e.g., pick up) an electric input signal 404A representing sound in an environment of a user of the hearing aid 400. In other words, the microphone (e.g., an input transducer) may be configured to obtain (e.g., pick up) sound from the environment of the hearing aid 300 and provide the electric input signal 404A representative of the sound.

The electric input signal 404A (e.g., $y(n) = x(n) + v(n)$) comprises an external input signal component 401 (e.g., $x(n)$) and a feedback input signal component 402A (e.g., $v(n)$, where n denotes a time index). The external input signal component 401 is indicative (e.g., representative) of the sound in the environment of the hearing aid 400. The feedback input signal component 402A is indicative of acoustic and/or mechanical feedback originating from the feedback path 402, the feedback path 402 from an output unit (e.g., an output transducer 410) to the input unit (e.g., the input transducer 404) of the hearing aid 400.

The forward path comprises a signal processing unit 406 configured to provide a processed signal 406A by applying one or more processing algorithms 406 to a feedback corrected input signal 405A. Optionally, the signal processing unit 406 may be configured to provide a processed signal 406A by applying a frequency- and/or level-dependent gain function (e.g., $g(n)$, where $n$ denotes a time index) to the feedback corrected input signal 405A (e.g., $e(n)$, where n denotes a time index). For example, the frequency- and/or level-dependent gain function can be seen as a time variant transfer function of the forward path. The frequency-and/or level-dependent gain function may be indicative of an impulse response of the forward path of the hearing aid 400.

In one or more example hearing aids, each of the frequency- and/or level-dependent gain function and the feedback path transfer function 402B is a vector. Each of frequency- and/or level-dependent gain function and the feedback path transfer function 402B may comprise a plurality of elements (e.g., $L$ elements), each of the plurality of elements representing a reaction over time to an external change (e.g., a reaction to an impulse). For example, each element of the plurality of elements can be construed as a samples of the impulse response at the time index $n$.

For example, in a dynamic feedback situation (e.g., with dynamic feedback path changes), the impulse response of each of the frequency- and/or level-dependent gain function and the feedback path transfer function 402B may change over time (e.g., so that the impulse response depends on the time index n). For example, in a static feedback situation, the impulse response of each of the frequency- and/or level-dependent gain function and the feedback path transfer function 402B may remain constant, the impulse response of each of the frequency- and/or level-dependent gain function and the feedback path transfer function 402B being independent of the time index n.

The forward path comprises an output unit configured to output, based on the processed signal 406A, an audible signal 410A to the user of the hearing aid. The processed signal 406A may be converted into an acoustic signal via the output transducer 410 (e.g., a loudspeaker). In other words, the output transducer 410 may be configured to provide, based on the processed signal 406A, stimuli perceivable by the user as sound.

The feedback control system 408 comprises the trained ML model 408. For example, the feedback control system 408 comprises the trained ML model 408A and an ML filter 408B (e.g., a time-varying filter). The trained ML model 408 is configured to provide an estimate 408BB of the feedback path transfer function 402B based on the electric input signal 404A and the processed signal 406A. In other words, the feedback control system 408 may be configured to estimate the impulse response of the feedback path 402.

The estimate 408AA of the feedback path transfer function 402B may be given by $\hat{h}_{ML}(n) = [\hat{h}_{ML,1}(n), \hat{h}_{ML,2}(n), ... , \hat{h}_{ML,L}(n)]^T$, with $L$ denoting a length of an impulse response of the feedback path and n denoting a (e.g., discrete) time index.

The feedback control system 408 is configured to provide an estimate 408BA of the feedback input signal component 402A based on the estimate 408AA of the feedback path transfer function 302B. For example, the estimate 408BA of the feedback input signal component 402A can be indicative of (e.g., comprise) the estimate 408AA of the feedback path transfer function 402B. The estimate 408AA of the feedback path transfer function 402B may be given by $h(n) = [\hat{h}_1(n), \hat{h}_2(n), ... , \hat{h}_L(n)]^T$, with $L$ denoting a length of an impulse response of the feedback path and n denoting a (e.g., discrete) time index.

For example, the trained ML model 408 is configured to provide the estimate 408AA of the feedback path transfer function 402B to the variable filter 408B. For example, the trained ML model 408 is configured to provide the estimate 408AA of the feedback path transfer function 402B in form of a plurality of filtering coefficients (e.g., $\hat{h}_{ML,1}(n), \hat{h}_{ML,2}(n), ... , \hat{h}_{ML,L}(n)$, such as $L$ filtering coefficients). For example, the trained ML model 408 is configured to repeatedly determine (e.g., inference) the estimate 408AA of the feedback path transfer function 402B (e.g., the plurality of filtering coefficients), such as for several feedback changes that may happen while the hearing aid 400 is being used by the user.

For example, the variable filter 408B is configured to provide the estimate 408BA of the feedback input signal component 402A based on the estimate 408AA of the feedback path transfer function 402B and the processed signal 406A. In other words, the variable filter 408B may be configured to determine the estimate 408BA of the feedback input signal component 402A by filtering the processed signal 406A using the plurality of filtering coefficients.

In one or more example hearing aids, the feedback control system 408 is configured to determine the feedback corrected input signal 405A based on the electric input signal 404A and the estimate 408BA of the feedback input signal component 402A. In other words, the feedback control system may comprise a combination unit 405 (e.g., a summation unit) configured to combine the electric input signal 404A and the estimate 408BA of the feedback input signal component 402A. For example, the combination unit 405 is configured to determine the feedback corrected input signal 405A by subtracting the estimate 408BA of the feedback input signal component 402A from the electric input signal 404A (e.g., $e(n) = y(n) - \hat{v}(n)$). The feedback corrected input signal 405A (e.g., $e(n)$) may be construed as an estimate of the external input signal component 401 (e.g., $x(n)$).

For example, the feedback control system 308 of FIG. 1 can be seen as an adaptive filter comprising an adaptive algorithm and a variable filter, whereas the feedback control system 408 of FIG. 2 can be seen as a ML-based feedback control system comprising a trained ML model (e.g., trained ML model 408A) and a variable ML filter (e.g., variable ML filter 408B).

For example, the present disclosure may aim at replacing the adaptive algorithm (e.g., the adaptive filter 308A of FIG. 1) by the trained ML model (e.g., trained ML model 408A) for improving the trade-off between convergence rate and steady-state error.

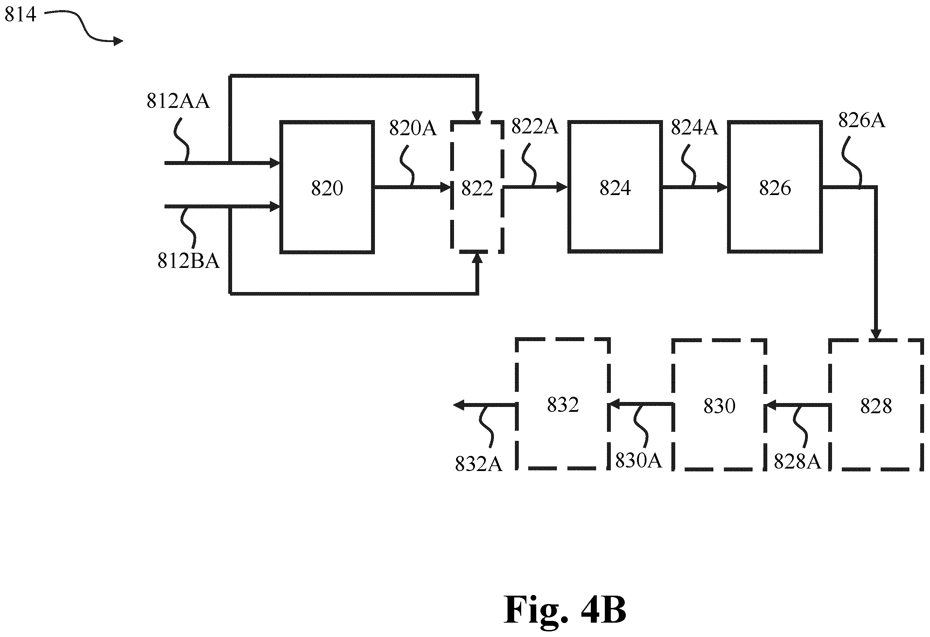

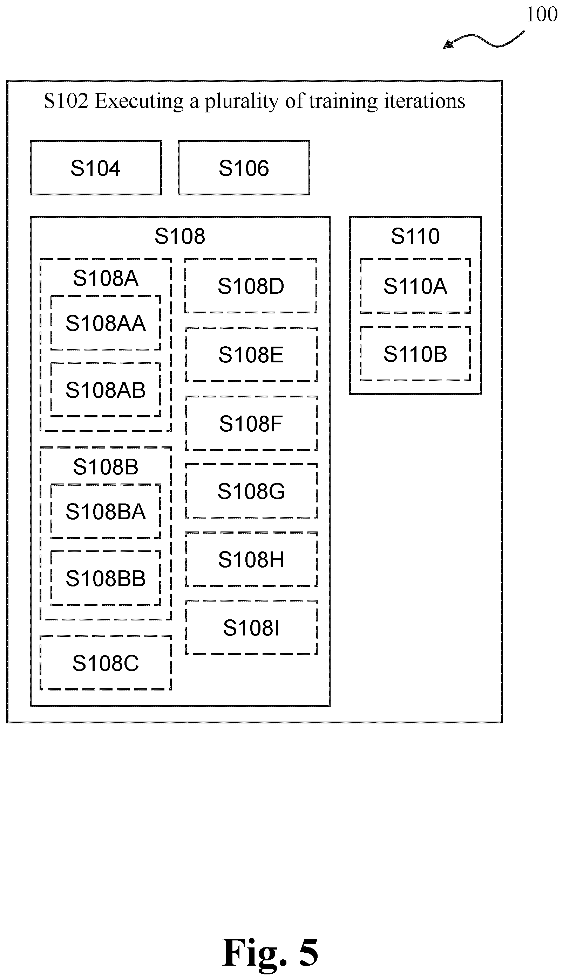

Embodiments of the present disclosure provide for a hearing aid (e.g., the hearing aid 400) comprising a ML-based feedback control system (e.g., comprising a trained ML model, e.g., trained ML model 408A). The ML model is trained according to the method 100 of FIG. 5. The ML model (e.g., the trained ML model 408A) comprises, in the following order, a convolutional layer (e.g., convolutional layer 820 of FIG. 4B), a first fully connected (FC) layer (e.g., first FC layer 824 of FIG. 4B), and a long-short term memory (LSTM) layer (e.g., LSTM layer 826 of FIG. 4B). For example, each layer of the ML model (e.g., the trained ML model 408A) can comprise an activation function. Optionally, the ML model (e.g., the trained ML model 408A) can further comprise a pooling layer. For example, the ML model (e.g., the trained ML model 408A) comprises, in the following order, a convolutional layer (e.g., convolutional layer 820 of FIG. 4B), a first fully connected (FC) layer (e.g., first FC layer 824 of FIG. 4B), a long-short term memory (LSTM) layer (e.g., LSTM layer 826 of FIG. 4B), a second FC layer (e.g., second FC layer 828 of FIG. 4B), a third FC layer (e.g., third FC layer 830 of FIG. 4B), and a pooling layer (e.g., pooling layer 832 of FIG. 4B).

The present disclosure may require that the ML model be trained using such layers (e.g., and respective activation functions) in the previously mentioned order, which may be substantially different from how an adaptive algorithm (e.g., the adaptive algorithm 308A of FIG. 1A) of an adaptive filter is implemented. For example, performing an adaptive algorithm (e.g., the adaptive algorithm 308A of FIG. 1A) comprises selecting a step-size parameter for determining the estimate of a feedback transfer function, which can be challenging in realistic environments.

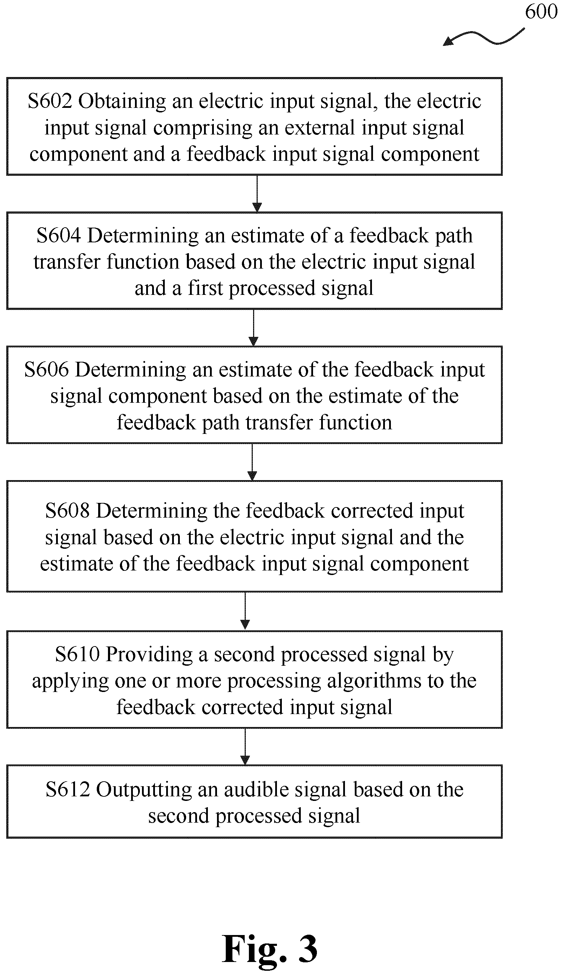

FIG. 3 shows a flow-chart illustrating an example method 600, performed by a hearing aid, for determining an estimate of a feedback path transfer function according to the present disclosure. The hearing aid is the hearing aid disclosed herein, such as hearing aid 400 of FIG. 2.

The method 600 comprises obtaining S602 an electric input signal representing sound of an environment of the hearing aid. The hearing aid may obtain the electric input signal from an input unit of the hearing aid.

The electric input signal comprises an external input signal component and a feedback input signal component. The external input signal component is indicative of the sound in the environment of the hearing aid. The feedback input signal component is indicative of acoustic and/or mechanical feedback originating from a feedback path from an output unit (e.g., an output transducer, e.g., the output transducer 410 of FIG. 2) of the hearing aid to the input unit (e.g., an input transducer, e.g., the input transducer 404 of FIG. 2) of the hearing aid.

For example, the electric input signal representing sound of an environment of the hearing aid may be construed as a signal from a real acoustic environment, such as an acoustic environment where a user using the hearing aid is located at (e.g., or where the hearing aid is in use). In other words, the hearing aid may be operating in a normal mode of operation. The hearing aid may perform the method 600 while operating in a normal mode of operation.

The method 600 comprises determining S604 an estimate of a feedback path transfer function based on the electric input signal and a first processed signal. For example, the first processed signal can be seen as processed signal determined at iteration $r$ - 1 of a plurality of iterations $R$. The first processed signal may be seen as a previously determined processed signal. The feedback path transfer function is representative of an impulse response of the feedback path. In other words, the method 600 may comprise determining the impulse response of the feedback path (e.g., a feedback path at iteration $r$).

The method 600 comprises determining S606 an estimate of the feedback input signal component based on the estimate of the feedback path transfer function.

A feedback control system of the hearing aid may be configured to provide the estimate of the feedback input signal component. The feedback control system comprises a trained ML model. The estimate of the feedback path transfer function may be determined (e.g., provided) by the trained ML model. The ML model is trained according to the method 100 of FIG. 5.

The method 600 comprises determining S608 the feedback corrected input signal (e.g., at iteration $r$) based on the electric input signal and the estimate of the feedback input signal component. The feedback corrected input signal is indicative of a feedback corrected version of the electric input signal (e.g., an acoustic and/or mechanical feedback corrected version of the electric input signal). The feedback control system may be configured to determine (e.g., provide) the estimate of the feedback input signal component.

The method 600 comprises providing S610 a second processed signal by applying one or more processing algorithms (e.g., or a frequency- and/or level-dependent gain function) to the feedback corrected input signal. For example, the second processed signal can be seen as processed signal determined at iteration $r$ of the plurality of iterations $R$. The second processed signal may be seen as a current processed signal. Optionally, the method 600 comprises applying a frequency- and/or level-dependent gain function to the feedback corrected input signal. A signal processing unit of the hearing aid may be configured to provide the second processed signal. A signal processing unit of the hearing aid (e.g., the signal processing unit 406 of FIG. 2) may be configured to apply such one or more processing algorithms (e.g., or a frequency- and/or level-dependent gain function) to the feedback corrected input signal.

For example, the method 600 is a machine learning (ML) inference method. In other words, the estimate of the feedback path transfer function may be an inferred (e.g., deduced) ML output. For example, determining the estimate of the feedback path transfer function comprises applying the electric input signal and the processed signal to the trained ML model.

For example, during a training stage, the ML model may introduce artifacts, e.g., be perceived as notably aggressive by the user of the hearing aid.

The method 600 may comprise controlling the estimate of the feedback path transfer function (e.g., a plurality of coefficients of such estimate) for preventing artifact reduction aggressiveness associated with the ML model. For example, the method 600 comprises controlling the estimate of the feedback path transfer function by applying a smoothing technique (e.g., a causal exponential smoothing technique) to the estimate of the feedback path transfer function. Such smoothing technique may be seen as a post-processing technique. For example, applying the smoothing technique to the estimate of the feedback path transfer function can enable mitigation of distortions in the estimate of the feedback path transfer function (e.g., due to non-optimal predictions achieved by the trained ML model).

A final estimate of the feedback path transfer function at a time index n may be given by,

$$\tilde{h}(n) = \alpha \hat{h}(n) + (1 - \alpha)\tilde{h}(n - 1), \qquad (4)$$

with $\hat{h}(n)$ denoting the estimate of the feedback path transfer function (e.g., the output of the trained ML model) at a time index $n$, $\hat{h}(n$ - 1) denoting a final estimate of the feedback path transfer function at a time index $n$ - 1, and $\alpha \in [0,1]$ denoting a weighting parameter. For example, $\hat{h}(n)$ denotes the final estimation at time index $n$. For example, $\hat{h}(n)$ can be seen as a smooth version of the estimate of the feedback path transfer function. The weighting parameter may be a user parameter.

For example, the estimate of the feedback input signal component can be determined based on the final estimate of the feedback path transfer function.

For example, the weighting parameter $\alpha$ can be used to further control the trade-off between convergence rate and steady-state error, similarly to parameter $N$ of Equation (1). For example, unlike the parameter $N$, the weighting parameter $\alpha$ can be tuned during the inference stage, without the need for re-training the ML model.

For example, the parameter N of Equation (1) (e.g., an average pooling parameter) can be set to 50 frames. For example, weighting parameter $\alpha$ can be (e.g., approximately) equal to 0.5.

The method 600 comprises outputting S612, based on the second processed signal, an audible signal to the user of the hearing aid. The output unit of the hearing aid may be configured to output such audible signal. For example, the method 600 comprises generating stimuli perceivable as sound to the user of the hearing aid based on the processed signal.

For example, the size of the electric input signal can be different from the size of a training input signal (e.g., used during a training stage). For example, the size of the processed signal can be different from the size of a training processed signal (e.g., used during a training stage). For example, the size of the estimate of the feedback path transfer function (e.g., provided by the ML model during the inference stage) can be the same as the size of the estimate of the training feedback path transfer function (e.g., provided by the ML model during the training stage). Put differently, the feedback path transfer function can be of the same size as the training feedback path transfer function.

Each of the multitude of testing input signals may comprise $M = 997$ frames. Each of the multitude of testing processed signals may comprise $M = 997$ frames. Each of the multitude of testing feedback path transfer function may comprise 64 coefficients (e.g., taps).

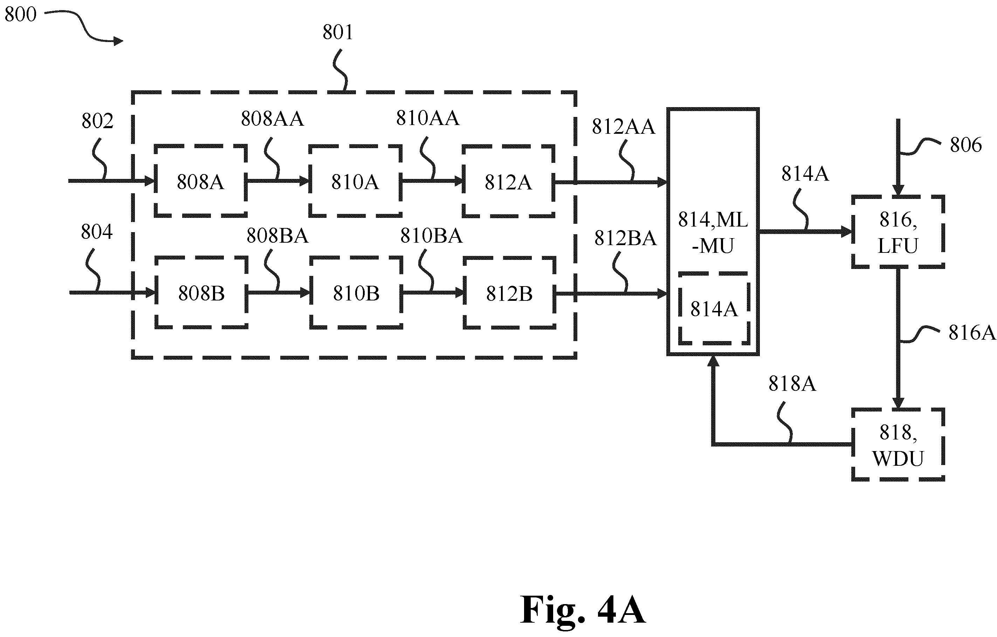

FIGS. 4A-4B schematically illustrate an example training structure 800 of a ML model 814 according to the present disclosure.

In the embodiment of FIG. 4A, the training structure 800 comprises a pre-processing unit 801, a ML model 814, a loss function unit 816, and weight determination unit 818. The ML model 814 may be seen as a ML model unit (e.g., whose output is determined using the ML model 814).

In one or more examples, the pre-processing unit 801 is configured to determine a first pre-processed signal 812AA by applying a pre-processing technique to a training input signal 802. The training input signal 802 comprises an external input signal component and a feedback input signal component. The external input signal component is indicative of sound from a known, simulated acoustic environment of a hearing aid. The feedback input signal component is indicative of acoustic and/or mechanical feedback originating from a feedback path of the hearing aid.

In one or more examples, the pre-processing unit 801 is configured to determine a second pre-processed signal 812BA by applying the pre-processing technique to the training processed signal 804. The training processed signal 804 is indicative of one or more applied processing algorithms to a training feedback corrected input signal. The training feedback corrected input signal is indicative of a feedback corrected version of the training input signal. For example, the training feedback corrected input signal is indicative of an acoustic and/or mechanical feedback corrected version of the electric input signal.

In one or more examples, the pre-processing unit 801 comprises one or more of: a first Fourier transformation unit 808A, a second Fourier transformation unit 808B, a first normalization unit 810A, a second normalization unit 810B, a first decomposition unit 812A, and a second decomposition unit 812B.

In one or more examples, the first Fourier transformation unit 808A is configured to determine a frequency-domain training input signal 808AA by applying a first Fourier transform-based technique to the training input signal 802. In one or more examples, the second Fourier transformation unit 808B is configured to determine a frequency-domain training processed signal 808BA by applying a second Fourier transform-based technique to the training processed signal 804. The first Fourier transform- based technique may the same as the second Fourier transform-based technique.

In one or more examples, the first normalization unit 810A is configured to determine a normalized version 810AA of the frequency-domain training input signal 808AA. In one or more examples, the second normalization unit 810B is configured to determine a normalized version 810BA of the frequency-domain training processed signal 808BA.

In one or more examples, the first decomposition unit 812A is configured to decompose the normalized version 810AA of the frequency-domain training input signal 808AA into a first primary component and a first secondary component. In other words, the normalized version 810AA of the frequency-domain training input signal 808AA may comprise the first primary component and the first secondary component. In one or more examples, the second decomposition unit 812B is configured to decompose the normalized version 810BA of the frequency-domain training processed signal 808BA into a second primary component and a second secondary component. In other words, the normalized version 810BA of the frequency-domain training processed signal 808BA may comprise the second primary component and the second secondary component.

For example, the first pre-processed signal 812AA can be the frequency-domain training input signal 808AA. For example, the first pre-processed signal 812AA can be the normalized version 810AA of the frequency-domain training input signal 808AA. For example, the first pre-processed signal 812AA can comprise the first primary component and the first secondary component. For example, the second pre-processed signal 812BA can be the frequency-domain training processed signal 808BA. For example, the second pre-processed signal 812BA can be the normalized version 810BA of the frequency-domain training processed signal 808BA. For example, the second pre-processed signal 812BA can comprise the second primary component and the second secondary component.

In one or more examples, the ML model 814 is configured to obtain (e.g., receive), from the pre-processing unit 801, the first pre-processed signal 812AA and the second pre-processed signal 812BA. Optionally, the ML model 814 can be configured to obtain, from the pre-processing unit 801, the training input signal 802 and the training processed signal 804 (e.g., training data). In other words, the ML model 814 may be configured to obtain, from the pre-processing unit 801, signals deriving (e.g., determined, calculated) from the training data.

In one or more examples, the ML model 814 is configured to determine, based on the first pre-processed signal 812AA and the second pre-processed signal 812BA, an estimate 814A of a training feedback path transfer function 806. Optionally, the ML model 814 is configured to determine, based on the training input signal 802 and the training processed signal 804 (e.g., training data), the estimate 814A of the training feedback path transfer function 806.

In one or more examples, the loss function unit 816 is configured to obtain the training feedback path transfer function 806 (e.g., target data). The training feedback path transfer function 806 is representative of an impulse response of the feedback path of the hearing aid. For example, the training feedback path transfer function 806, the training input signal 802 and the training processed signal 804 can be obtained from a memory of an electronic device (e.g., a computer) or a memory of the hearing aid.

In one or more examples, the loss function unit 816 is configured to determine a training error signal 816A based on the estimate 814A of the training feedback path transfer function 806 and the training feedback path transfer function 806.

In one or more examples, the weight determination unit 818 is configured to update (e.g., determine) a plurality of weights 818A (using a learning rule) of the ML model 814 based on the training error signal 816A. The plurality of updated weights may be stored in a ML model module 814A (e.g., memory). The ML model 814 is updated based on the training feedback path transfer function 806 (e.g, the target data) and the estimate 814A of the training feedback path transfer function 806.

FIG. 4B shows an example structure of the ML model 814. The ML model 814 comprises, in the following order, a convolutional layer 820, a first FC layer 824, and an LSTM layer 826.

In one or more examples, the ML model further comprises one or more of: a second FC layer 828 and a third FC layer 830. In one or more examples, each of the first FC layer 826, second FC layer 828, third FC layer 830 comprises a FC-based technique indicative of an activation function. In one or more examples, the activation function comprises one or more of: a sigmoid function, a hyperbolic tangent (tanh), a rectified linear unit (ReLU) function, a leaky ReLU function, a swish function, and Gaussian Error linear unit (GELU) function. In one or more examples, the activation function can comprise one or more of: a sigmoid-based function, an ReLU-based function, an exponential linear unit (ELU)-based function, a square root linear unit (SRLU)-based function, a Soft-Max function, and any other suitable activation function.

In one or more examples, the convolutional layer 820 comprises a convolutional-based technique. In one or more examples, the convolutional layer 820 is configured to determine a first ML processed signal 820A by applying the convolutional-based technique to the first pre-processed signal 812AA and the second pre-processed signal 812BA.

In one or more examples, the ML model 814 comprises a concatenation unit 822 configured to determining a second ML processed signal 822A by concatenating the first ML processed signal 820A with the first pre-processed signal 812AA and the second pre-processed signal 812BA over frequency.

In one or more examples, a first FC layer 824 comprises a first FC-based technique. In one or more examples, the first FC layer 824 is configured to determining a third ML processed signal 824A by applying the first FC-based technique to the second ML processed signal 822A.

In one or more examples, the LSTM layer 826 comprises an LSTM-based technique. In one or more examples, the LSTM layer 826 is configured to determine a fourth ML processed signal 826A by applying the LSTM-based technique to the third ML processed signal 824A. In one or more examples, the fourth ML processed signal 826A can be the estimate 814A of the training feedback path transfer function 806.

In one or more examples, a second FC layer 828 comprises a second FC-based technique. In one or more examples, the second FC layer 828 is configured to determine a fifth ML processed signal 828A by applying the second FC-based technique to the fourth ML processed signal 826A. In one or more examples, the fifth ML processed signal 828A is the estimate 814A of the training feedback path transfer function 806.

In one or more example methods, a third FC layer 830 comprises a third FC-based technique. In one or more examples, the third FC layer 830 is configured to determine a sixth ML processed signal 830A by applying the third FC-based technique to the fifth ML processed signal 828A. In one or more examples, the sixth ML processed signal 830A can be estimate 814A of the training feedback path transfer function 806.

In one or more examples, the ML model further comprises a pooling layer 832. In one or more examples, the pooling layer 832 comprises a pooling-based technique. In one or more examples, the pooling layer 832 is configured to determine a seventh ML processed signal 832A by applying the pooling-based technique to the sixth ML processed signal 830A. In one or more examples, the seventh ML processed signal 832A can be the estimate 814A of the training feedback path transfer function 806.

FIG. 5 shows a flow-chart illustrating an example method 100 for training a ML model for use in a feedback control system of a hearing aid according to the present disclosure.

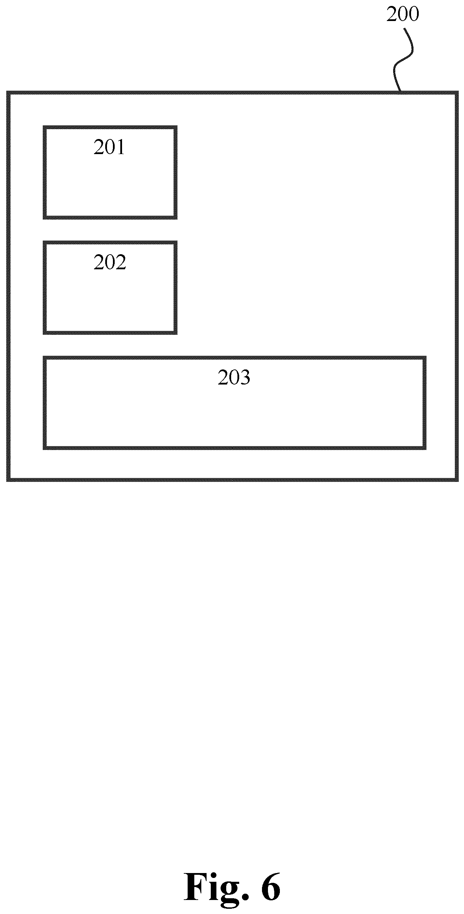

In one or more example methods, the method 100 is performed by an electronic device (e.g., electronic device 200 of FIG. 6). For example, the electronic device disclosed herein can be seen as a computer. For example, the electronic device disclosed herein can be seen as any device comprising a processing unit, (e.g., a central processing unit and/or a local processing unit). The electronic device may comprise one or more of: a hearing aid, a smartphone (e.g., a mobile phone), a portable electronic device, a wearable electronic device (e.g., a smartwatch), a speakerphone, a tablet, a computer, and any other suitable electronic device.

In one or more example methods, the method 100 is a computer-implemented method for training the ML model for use in the feedback control system of the hearing aid (e.g., hearing aid 400 of FIG. 2).

A training stage may be followed by an inference stage. In other words, the method 100 (e.g., of training the ML model) may be followed by an inference method, such as method 600 of FIG. 3. During the training stage, a plurality of weights associated with the ML model may be (continuously) updated. In the inference stage, the ML model is trained (e.g., the plurality of weights are fixed) and ready to be deployed.

The method 100 comprises executing S102 a plurality of training iterations.

Each training iteration of the plurality of training iterations comprises obtaining S104 training data.

The training data comprises a training input signal and a training processed signal. The training input signal comprises an external input signal component and a feedback input signal component. The external input signal component is indicative of sound from a known, simulated acoustic environment of the hearing aid. The feedback input signal component is indicative of acoustic and/or mechanical feedback originating from a feedback path of the hearing aid.

The training processed signal is indicative of one or more applied processing algorithms to a training feedback corrected input signal. The training feedback corrected input signal is indicative of a feedback corrected version of the training input signal. For example, the training feedback corrected input signal is indicative of an acoustic and/or mechanical feedback corrected version of the electric input signal.

Each training iteration of the plurality of training iterations comprises obtaining S 106 target data comprising a training feedback path transfer function representative of an impulse response of the feedback path of the hearing aid.

Each training iteration of the plurality of training iterations comprises determining S108, based on the training data, an estimate of the training feedback path transfer function.

Each training iteration of the plurality of training iterations comprises updating S 110 the ML model based on the target data and the estimate of the training feedback path transfer function.

The ML model comprises, in the following order, a convolutional layer, a first fully connected (FC) layer, and an LSTM layer. In one or more example methods, the ML model further comprises one or more of: a second FC layer and a third FC layer. In one or more example methods, each of the first, second, and third FC layers comprises an FC-based technique indicative of an activation function. In one or more example methods, the activation function comprising one or more of: a sigmoid function, a hyperbolic tangent (tanh), a rectified linear unit (ReLU) function, a leaky ReLU function, a swish function, and Gaussian Error linear unit (GELU) function. In one or more example methods, the activation function can comprise one or more of: a sigmoid-based function, an ReLU-based function, an exponential linear unit (ELU)-based function, a square root linear unit (SRLU)-based function, a SoftMax function, and any other suitable activation function.

In one or more example methods, determining S108 the estimate of the training feedback path transfer function comprises determining S108A a first pre-processed signal by applying a pre-processing technique to the training input signal. In one or more example methods, determining S108 the estimate of the training feedback path transfer function comprises determining S108B a second pre-processed signal by applying the pre-processing technique to the training processed signal.

In one or more example methods, determining S108A the first pre-processed signal comprises determining S108AA a frequency-domain training input signal by applying a Fourier transform-based technique to the training input signal. In one or more example methods, determining S108B the second pre-processed signal comprises determining S108BA a frequency-domain training processed signal by applying the Fourier transform-based technique to the training processed signal.

In one or more example methods, determining S108A the first pre-processed signal comprises determining S108AB a normalized version of the frequency-domain training input signal. In one or more example methods, the normalized version of the frequency-domain training input signal comprises a first primary component and a first secondary component. In one or more example methods, determining S108B the second pre-processed signal comprises determining S108BB a normalized version of the frequency-domain training processed signal. In one or more example methods, the normalized version of the frequency-domain training processed signal comprises a second primary component and a second secondary component.

In one or more example methods, the first pre-processed signal and the second pre-processed signal are provided as inputs to the ML model. In other words, determining the estimate of the training feedback path transfer function may comprise providing the first pre-processed signal and the second pre-processed signal as input to the ML model.

In one or more example methods, the convolutional layer comprises a convolutional-based technique. In one or more example methods, determining S108 the estimate of the training feedback path transfer function comprises determining S108C a first ML processed signal by applying the convolutional-based technique to the first pre-processed signal and the second pre-processed signal.

In one or more example methods, determining S108 the estimate of the training feedback path transfer function comprises determining S108D a second ML processed signal by concatenating the first ML processed signal with the first pre-processed signal and the second pre-processed signal over frequency.

In one or more example methods, a first FC layer comprises a first FC-based technique. In one or more example methods, determining S108 the estimate of the training feedback path transfer function comprises determining S108E a third ML processed signal by applying the first FC-based technique to the second ML processed signal.

In one or more example methods, the LSTM layer comprises an LSTM-based technique. In one or more example methods, determining S108 the estimate of the training feedback path transfer function comprises determining S108F a fourth ML processed signal by applying the LSTM-based technique to the third ML processed signal. In one or more example methods, the fourth ML processed signal is the estimate of the training feedback path transfer function.

In one or more example methods, a second FC layer comprises a second FC-based technique. In one or more example methods, determining S108 the estimate of the training feedback path transfer function comprises determining S108G a fifth ML processed signal by applying the second FC-based technique to the fourth ML processed signal. In one or more example methods, the fifth ML processed signal is the estimate of the training feedback path transfer function.

In one or more example methods, a third FC layer comprises a third FC-based technique. In one or more example methods, determining S108 the estimate of the training feedback path transfer function comprises determining S108H a sixth ML processed signal by applying the third FC-based technique to the fifth ML processed signal. In one or more example methods, the sixth ML processed signal is the estimate of the training feedback path transfer function.

In one or more example methods, the ML model further comprises a pooling layer. In one or more example methods, the pooling layer comprises a pooling-based technique. In one or more example methods, determining S108 the estimate of the training feedback path transfer function comprises determining S108I a seventh ML processed signal by applying the pooling-based technique to the sixth ML processed signal. In one or more example methods, the seventh ML processed signal is the estimate of the training feedback path transfer function.

In one or more example methods, updating S 110 the ML model comprises determining S110A a training error signal based on the estimate of the training feedback path transfer function and the training feedback path transfer function. In one or more example methods, updating S 110 the ML model comprises updating S110B a plurality of weights, using a learning rule, of the ML model based on the training error signal.

FIG. 6 shows a block diagram illustrating an example electronic device 200 according to the disclosure. The electronic device 200 comprises a memory 201, a processor 202, and an interface 203. The electronic device 200 may be configured to perform the method disclosed in FIG. 5.

For example, the electronic device 200 can be seen as any device comprising a processing unit, (e.g., a central processing unit and/or a local processing unit). The electronic device may comprise one or more of: a hearing aid, a smartphone (e.g., a mobile phone), a portable electronic device, a wearable electronic device (e.g., a smartwatch), a speakerphone, a tablet, a computer, and any other suitable electronic device.

The electronic device 200 is configured to execute (e.g., via the processor 202) a plurality of training iterations.

The electronic device 200 is configured to, for each of the plurality of training iterations, obtain (e.g., via the interface 203 and/or the memory 201) training data.

The training data comprises a training input signal and a training processed signal. The training input signal comprises an external input signal component and a feedback input signal component. The external input signal component is indicative of sound from a known, simulated acoustic environment of the hearing aid. The feedback input signal component is indicative of acoustic and/or mechanical feedback originating from a feedback path of the hearing aid. The training processed signal is indicative of one or more applied processing algorithms to a training feedback corrected input signal. The training feedback corrected input signal is indicative of a feedback corrected version of the training input signal (e.g., of an acoustic and/or mechanical feedback corrected version of the training input signal).

The electronic device 200 is configured to, for each of the plurality of training iterations, obtain (e.g., via the interface 203 and/or the memory 201) target data comprising a training feedback path transfer function representative of an impulse response of the feedback path of the hearing aid.

For example, the electronic device 200 is configured to obtain the training data and the target data from the memory 201 (such as, of the electronic device) and/or a memory of an external device (e.g., external to the electronic device 200). The external device may be a hearing aid and/or a server device.

The electronic device 200 is configured to, for each of the plurality of training iterations, determine (e.g., via the processor 202) an estimate of the training feedback path transfer function based on the training data.

The electronic device 200 is configured to, for each of the plurality of training iterations, update (e.g., via the processor 202) the ML model based on the target data and the estimate of the training feedback path transfer function.

The ML model comprises, in the following order, a convolutional layer, a first fully connected (FC) layer, and an LSTM layer. Optionally, the ML model can further comprise one or more of: a second FC layer, a third FC layer, and a pooling layer.

For example, the electronic device 200 comprises the training structure 800 of FIGS. 4A-4B. For example, the processor 202 comprises the training structure 800 of FIGS. 4A-4B.

Interface 203 may be either configured for wired or wireless communications. The interface 203 may be configured for wireless communications via a wireless communication system, such as short-range wireless communications systems, such as Wi-Fi, Bluetooth, Zigbee, IEEE 802.11, IEEE 802.15, infrared and/or the like. Optionally, the interface 203 may comprise a connector for wired communications, via a connector, such as by using an electrical cable. The connector may connect the electronic device 200 to an auxiliary device, e.g., for a wired connection.

Processor 202 is optionally configured to perform any of the operations disclosed in FIG. 5 (such as any one or more of: S102, S104, S106, S108, S108A, S108AA, S108AB, S108B, S108BA, S108BB, S108C, S108D, S108E, S108F, S108G, S108H, S108I, S110, S110A, S110B). The operations of the electronic device 200 may be embodied in the form of executable logic routines (for example, lines of code, software programs, etc.) that are stored on a non-transitory computer readable medium (for example, memory 201) and are executed by processor 202.

Furthermore, the operations of the electronic device 200 may be considered a method that the electronic device 200 is configured to carry out. Also, while the described functions and operations may be implemented in software, such functionality may also be carried out via dedicated hardware or firmware, or some combination of hardware, firmware and/or software. Memory circuitry 201 may be one or more of: a buffer, a flash memory, a hard drive, a removable media, a volatile memory, a non-volatile memory, a random-access memory (RAM), and any other suitable device. In a typical arrangement, memory 201 may include a non-volatile memory for long term data storage and a volatile memory that functions as system memory for processor 202. Memory 201 may exchange data with processor 202 over a data bus. Control lines and an address bus between memory 201 and processor 202 also may be present (not shown in FIG. 6). Memory 201 is considered a non-transitory computer readable medium.

Memory 201 may be configured to store training data (e.g., a training input signal, a training processed signal), target data (e.g., a training feedback path transfer function), an estimate of a training feedback path transfer function, a training error signal, a plurality of weights in a part of the memory.

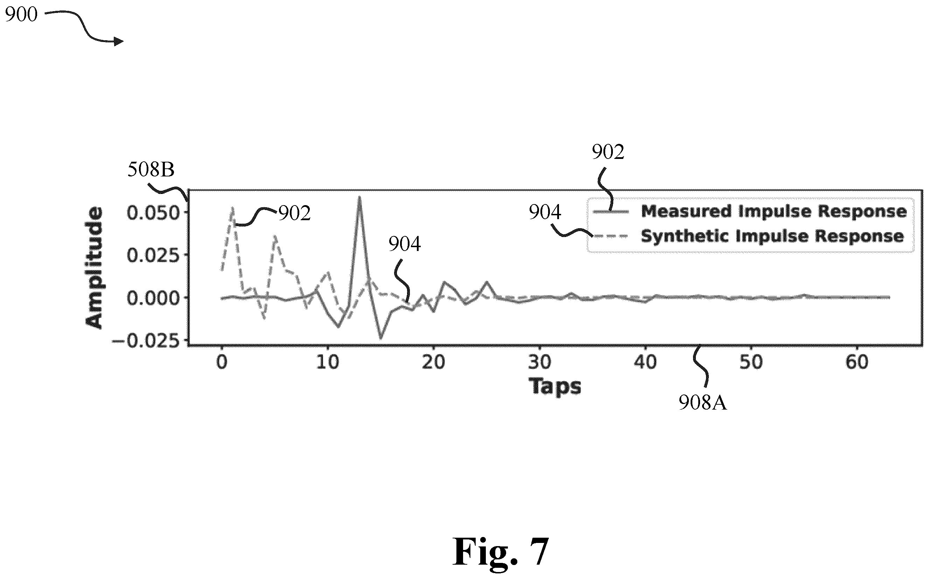

FIG. 7 illustrates example impulse responses 902, 904 of a feedback path of a hearing aid according to the disclosure.

For example, target data (e.g., a training feedback transfer function) obtained (e.g., generated) for each training iteration of the plurality of training iterations can comprise a synthetically generated feedback path transfer function or a measured feedback path transfer function. For example, the ML model to be used in a feedback control system of the hearing aid can be trained (e.g., for the plurality of training iterations) using synthetically generated feedback path transfer functions. For example, the ML model to be used in a feedback control system of the hearing aid can be trained (e.g., for the plurality of training iterations) using measured feedback path transfer functions. For example, the ML model to be used in a feedback control system of the hearing aid can be trained (e.g., for the plurality of training iterations) using (e.g., a mixture of) synthetically generated feedback path transfer functions (e.g., during a pre-train process) and measured feedback path transfer functions (e.g., during a fine-tuning process).

A feedback path transfer function is representative of an impulse response of a feedback path.

For example, the impulse response 902 is a measured impulse response, e.g., an impulse response represented by a measured feedback path transfer function, such as from a realistic acoustic environment. For example, the impulse response 904 is a synthetically generated impulse response, e.g., an impulse response represented by a synthetically generated feedback path transfer function, such as from a simulated acoustic environment. FIG. 7 may highlight similarities and differences between impulse response 902 (e.g., a measured impulse response) and impulse response 904 (e.g., a synthetically generated impulse response).

For example, the ML model to be used in the feedback control system of the hearing aid can be trained (e.g., for the plurality of training iterations) using a training data set (e.g., comprising a plurality of training input signals and a plurality of training processed signals) and a target data set (e.g., comprising a plurality of training feedback transfer functions).

Each of the plurality of training input signals may comprise $M = 997$ frames. Each of the plurality of training processed signals may comprise $M = 997$ frames. Each of the plurality of training feedback path transfer functions may comprise 64 coefficients (e.g., taps).

For example, the ML model to be used in the feedback control system of the hearing aid is to be trained, for a training iteration of the plurality of training iterations, using a training feedback transfer function of the plurality of training feedback transfer functions, a corresponding training input signal of the plurality of training input signals (e.g., a training signal whose feedback input signal component is determined based in such training feedback transfer function), and a corresponding training processed signal of the plurality of training processed signals (e.g., a processed signal resulting from application of one or more processing algorithms to a signal determined based on the corresponding training input signal and the training feedback transfer function, such as to a training feedback corrected input signal)

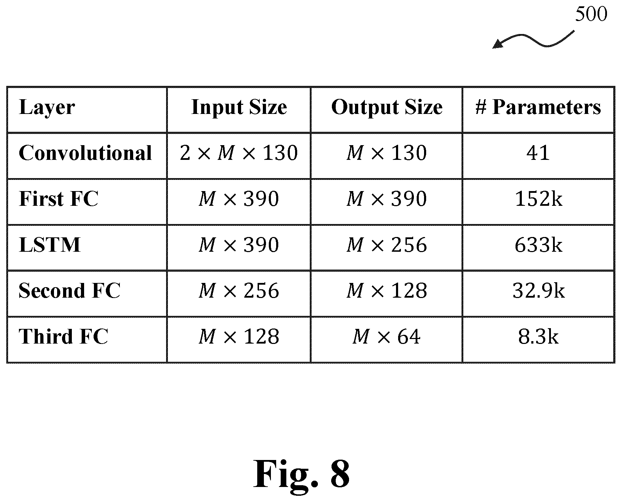

FIG. 8 shows a Table 500 illustrating an example configuration for each layer of a ML model according to the disclosure. For example, Table 500 shows an input size, an output size, and a number of trainable parameters (e.g., referred as "# Parameters" in Table 1) for each layer of the ML model. For example, other configurations (e.g., other input sizes, output sizes, and number of parameters) can be used to train the ML model.

A number of trainable parameters of a layer may refer to a number of parameters (e.g., variable) for one or more filters of such layer. For example, the number of trainable parameters may be seen as a number of weights (e.g., including biases) learnt during training. In other words, the number of trainable parameters may be seen as a number of weights that the ML model adjusts during a training stage (e.g., training mode of operation). For example, each of the plurality of weights updated based on a training error signal can be seen as a trainable parameter of the ML model.

The ML model comprises, in the following order, a convolutional layer, a first fully connected (FC) layer, and an LSTM layer. Optionally, the ML model can further comprise one or more of: a second FC layer, a third FC layer, and a pooling layer.

For example, the convolutional layer is configured to determine a first ML processed signal by applying a convolutional-based technique to a first pre-processed signal and a second pre-processed signal. For example, the convolutional layer is configured to provide as output the first ML processed signal in form of a matrix having a size of $M \times 130$, with $M$ denoting a number of frames. For example, the convolutional layer is configured to receive as input the first pre-processed signal and the second pre-processed signal. For example, the convolutional layer is configured to receive the first pre-processed signal and the second pre-processed signal in form of a matrix having a size of $2 \times M \times 130$. In other words, each of the first pre-processed signal and the second pre-processed signal having a size $M \times 130$ (e.g., taking form of a matrix having such size). For example, the convolutional layer comprises a filter (e.g., kernel) having a size 4 $\times$ 5, such as over 4 frames (e.g., time) and 5 frequency bins (e.g., frequency).

In one or more examples, the convolutional layer may comprise 41 trainable parameters, such as 41 weights (e.g., including biases) to be determined and updated while training the ML model.

For example, a first FC layer is configured to determine a third ML processed signal by applying a first FC-based technique to a second ML processed signal. The second ML processed signal may be determined by concatenating the first ML processed signal with the first pre-processed signal and the second pre-processed signal over frequency (e.g. over $k$ = 130 frequency bins and/or indexes). For example, the first FC layer is configured to receive as input the second ML processed signal in form of a matrix having a size of $M \times 390$. For example, the first FC layer is configured to provide as output the third ML processed signal in form of a matrix having a size of $M \times 390$.

In one or more examples, the first FC layer may comprise 152k trainable parameters, such as 152k weights (e.g., including biases) to be determined and updated while training the ML model. For example, 152k can be construed as 152 000 trainable parameters.

For example, an LSTM layer is configured to determine a fourth ML processed signal by applying an LSTM-based technique to the third ML processed signal. For example, the LSTM layer is configured to receive as input the third ML processed signal in form of a matrix having a size of $M \times 390$. For example, the LSTM layer is configured to provide as output the fourth ML processed signal in form of a matrix having a size of $M \times 256$.

In one or more examples, the LSTM layer may comprise 663k trainable parameters, such as 663k weights (e.g., including biases) to be determined and updated while training the ML model. For example, 663k can be construed as 663 000 trainable parameters.

For example, a second FC layer is configured to determine a fifth ML processed signal by applying a second FC-based technique to the fourth ML processed signal. For example, the second FC layer is configured to receive as input the fourth ML processed signal in form of a matrix having a size of $M \times 256$. For example, the second FC layer is configured to provide as output the fifth ML processed signal in form of a matrix having a size of $M \times 128$.

In one or more examples, the second FC layer may comprise 32.9k trainable parameters, such as 32.9k weights (e.g., including biases) to be determined and updated while training the ML model. For example, 32.9k can be construed as 32 900 trainable parameters.

For example, a third FC layer is configured to determine a sixth ML processed signal by applying a third FC-based technique to the fifth ML processed signal. For example, the third FC layer is configured to receive as input the fifth ML processed signal in form of a matrix having a size of $M \times 128$. For example, the third FC layer is configured to provide as output the sixth ML processed signal in form of a matrix having a size of $M \times 64$.

In one or more examples, the third FC layer may comprise 8.3k trainable parameters, such as 8.3k weights (e.g., including biases) to be determined and updated while training the ML model. For example, 8.3k can be construed as 8300 trainable parameters.

The ML model may further comprise a pooling layer. For example, the pooling layer is configured to determine a seventh ML processed signal by applying the pooling-based technique to the sixth ML processed signal. The pooling layer may be configured to receive as input the sixth ML processed signal in form of a matrix having a size of $M \times 64$. The pooling layer may be configured to provide as output the seventh ML processed signal in form of a matrix having a size of $(M - (N - 1)) \times 64$, with $N$ denoting a value for controlling a speed of convergence and accuracy of estimations (e.g., estimation of a training feedback path transfer function). For example, the pooling layer does not comprise trainable parameters.

For example, the ML model comprises 856k trainable parameters (e.g., in total), such as 856k weights (e.g., including biases) to be determined and updated during the training stage. For example, 856k can be construed as 856 000 trainable parameters.

For example, the ML model can be trained using a plurality of training input signals (e.g., using 5375 utterances for training and 1344 utterances for validation, each utterance having a duration of 10 seconds).

For example, an utterance for training can be construed as an external input signal component to be used for generating a training input signal and a training processed signal, both signals associated with a pre-training process and/or a fine-tuning process. For example, a training input signal associated with the pre-training process can be determined based on a synthetic feedback transfer function. For example, a training input signal associated with a fine-tuning process can be determined based on a measured feedback transfer function.

For example, the ML model can be trained (e.g., pre-trained, validated) using a multitude of synthetically generated feedback transfer functions (e.g., impulse responses). For example, the multitude of synthetically generated feedback transfer functions can be generated to model realistic scenarios (e.g., with a scaling to ensure that maximum, such as across frequency, magnitude response is randomly and uniformly in the range of [-20, -10] dB). For example, 10 000 feedback transfer functions have been generated (e.g., by computer simulation) and randomly combined with the 1344 utterances for generating 100 000 training sequences and 20 000 validation sequences. The validation sequences may be used for validating a fine-tuned ML model. The training sequences may be seen as training data associated with a pre-training process and/or fine-tuning process (e.g., training input signals and/or training processed signals) as well as target data associated with the pre-training process and/or the fine-tuning process (e.g., synthetically generated feedback path transfer functions and/or measured path transfer functions).

For example, an utterance for validation can be construed as an external input signal component to be used for generating a training input signal and a training processed signal, both signals associated with a validation process. For example, the training input signal associated with the validation process can be determined based on a measured feedback transfer function or a synthetically generated feedback path transfer function.

For example, the ML model can be trained (e.g., pre-trained, fine-tuned, validated) using a multitude of measured feedback transfer functions (e.g., impulse responses). For example, the multitude of measured feedback transfer functions can include 1010 measured feedback transfer functions (each of such measured feedback transfer functions associated with a specific combination of hearing aids and earpieces). For example, the 1010 measured feedback transfer functions can be divided into three groups, e.g., *753* for training (e.g., pre-training and fine-tuning) the ML model, *107* for validating the ML model, and *200* for testing the ML model (e.g., for testing the resulting validated ML model). For example, the multitude of measured feedback transfer functions can be generated to avoid large discrepancy within the data (e.g., each of the multitude of measured feedback transfer functions comprising a magnitude response, with the magnitude response being scaled randomly in the range of [-20, -10] dB). For example, the 753 training sequences, the *107* validation sequences, and the measured and/or synthetically generated feedback transfer functions can be randomly combined in order to generate 10 000 training sequences and *3000* validation sequences.

For example, generation of the training sequences and validation sequences can be performed using a closed-loop hearing aid simulation. For example, a signal processing unit (e.g., associated with the hearing aid simulation) can be configured to determine a training processed signal (e.g., associated with the pre-training process, the fine-tuning process, the validation process) by applying a frequency- and/or level-dependent gain function to a training feedback corrected input signal (e.g., associated with the pre-training process, the fine-tuning process, the validation process). For example, the frequency- and/or level-dependent gain function can be generated to model a realistic environment, such as challenging environment (e.g., to ensure a maximum loop gain, such as $\max_\omega (|H(\omega, n) \cdot G|$, with $H(\omega, n)$ denoting a frequency response of a feedback transfer function) uniformly within the interval [-6, 0) dB.

For example, the training sequences and the validation sequences can be segmented into two second non-overlapping sequences, thus generating final 52 648 training sequences and final *6547* validation sequences. For example, such segmentation can be performed to reduce the number of frames (e.g., *M*) over which a training loss is averaged in each gradient update (e.g., training iteration) during training stage. Each of the multitude of training input signals (e.g., associated with the pre-training process, the fine-tuning process, the validation process) may comprise $M = 997$ frames. Each of the multitude of training processed signals (e.g., associated with the pre-training process and/or fine-tuning process) may comprise $M = 997$ frames. Each of the multitude of training feedback path transfer functions (e.g., measured feedback transfer function and/or synthetically generated feedback transfer function) may comprise 64 coefficients (e.g., taps). The (final) validation sequences may be different from the (final) training sequences.

FIG. 9 shows a graph 700 illustrating an example training loss according to the disclosure. The horizontal axis 708A (e.g., X-axis) represents a time in seconds (e.g., time range from 0 to 15 seconds). The vertical axis 708B (e.g., Y-axis) represents a training loss in decibels (dB). FIG. 9 illustrates a training loss associated with an NESD loss function, e.g., depicts NESD curves averaged across a testing data set. In other words, the average NESD over time may reflect the accuracy of the impulse response estimation.

Curve 702 illustrates a training loss associated with a NESD loss function for a time-domain broadband adaptive feedback control technique (e.g., referred as "TD-AFC"), such as a conventional adaptive filtering technique. In other words, curve 702 may illustrate an average performance of a feedback control system comprising an adaptive filter based on an TD-AFC technique (e.g., the adaptive algorithm is a TD-AFC technique).

Curve 704 illustrates a training loss associated with a NESD loss function for a frequency-domain adaptive feedback control technique (e.g., referred as "FD-AFC"), such as a conventional adaptive filtering technique. In other words, curve 704 may illustrate an average performance of a feedback control system comprising an adaptive filter based on an FD-AFC technique (e.g., the adaptive algorithm is a FD-AFC technique).

Both the FD-AFC and TD-AFC make use of a Normalized Least Mean Squares (NLMS) algorithm. For example, the FD-AFC technique adapts above 1000 Hz to avoid low-frequency artifacts.

Curves 706, 708, 710 illustrate a training loss associated with a NESD loss function for an DFC technique. In other words, curve 706 may illustrate an average performance of a feedback control system comprising a ML model trained based on an DFC technique (such as, trained based on the methos of training provided by the present disclosure).

Curve 706 illustrates an average performance of a feedback control system comprising an ML model which has been trained (e.g., during a training stage) using synthetically generated feedback transfer functions (e.g., as target data) and tested (e.g., during a testing stage which is similar to an inference stage) using measured feedback transfer functions, such as referred as "DFC(S) method".

Curve 708 illustrates an average performance of a feedback control system comprising an ML model which has been trained (e.g., during a training stage) and tested (e.g., during a testing stage which is similar to an inference stage) using measured feedback transfer functions, such as referred as "DFC(M) method".

Curve 710 illustrates an average performance of a feedback control system comprising an ML model which has been pre-trained (e.g., during a training stage) with synthetically generated feedback transfer functions (e.g., as target data), fine-tuned (e.g., during a training stage) with measured feedback transfer functions (e.g., as target data), and tested (e.g., during a testing stage which is similar to an inference stage) with measured feedback transfer functions, such as referred as "DFC" method. In other words, Curve 710 may illustrate an average performance of a feedback control system comprising a ML model which has been trained with synthetic feedback transfer functions and measured feedback transfer functions, and tested with measured feedback transfer functions.

For example, the measured feedback transfer functions can be indicative of real-world measured feedback transfer functions (e.g., impulse responses of real-world measured feedback paths).

For example, the testing data set comprise a multitude of testing input signals, a multitude of testing processed signals, and a multitude of testing feedback path transfer functions. The testing data set may be generated via computer simulation, e.g., simulating a challenging acoustic scenario (such as close to instability). The multitude of testing feedback path transfer functions may comprise synthetically generated feedback path transfer functions. For example, the testing data set comprises data different from training data and target data used during the training stage. Each of the multitude of testing input signals may comprise $M = 997$ frames. Each of the multitude of testing processed signals may comprise $M = 997$ frames. Each of the multitude of testing feedback path transfer function may comprise 64 coefficients (e.g., taps).

For example, the testing data set comprises 100 utterances (e.g., input signals) from 6 speakers (e.g., users), with each utterance lasting 15 seconds. For example, a feedback path change occurs in the one hundred utterances at 7.5 seconds. For example, the testing data set comprises real-world data, e.g., data obtained from a realistic (e.g., real world) environment. For example, an utterance for testing (e.g., from the testing data set) can be construed as an external input signal component to be used for generating a testing input signal and a testing processed signal, both signals associated with a testing process. For example, the testing input signal can be determined based on a measured feedback transfer function. For example, the testing data set can comprise *200* for testing sequences (e.g., for testing a validated ML model).

For example, the validated ML model can be tested using the testing data set. For example, testing the validated ML model can include performing the method of training of the present disclosure during a fourth set of training iterations of the plurality of training iterations. For example, the testing data set can comprise training data associated with the testing process (e.g., testing sequences) and target data associated with the testing process (e.g., testing sequences). For example, the training data associated with the testing process can comprise the testing input signal and a testing processed signal. For example, the target data associated with the testing process can comprise a measured feedback path transfer function (e.g., a testing sequence). A measured feedback path transfer function associated with given utterance of the 100 utterances may be indicative of the feedback path change occurring in such given utterance at 7.5 seconds. The testing sequences may be different from the validation sequences and training sequences. For example, the ML model of the present disclosure can be trained using training sequences, validation sequences, and testing sequences.

FIG. 9 shows that the feedback control system comprising the ML model trained according to the DFC method (e.g., trained with synthetic feedback transfer functions and measured feedback transfer functions, and tested with measured feedback transfer functions) results, when compared to the conventional adaptive filtering technique, in a smaller steady-state error, while converging significantly faster, after abrupt feedback path changes. In particular, in the embodiment of FIG. 9 (e.g., in the specific case simulated in FIG. 9), THE FD-AFC method requires approximately 3 seconds to converge on average, while the DFC method converges in less than 0.1 seconds, the DFC method being able to converge about 30 times faster in comparison. In addition, the steady-state error associated with the DFC method is around 2 dB lower when compared to the steady-state error associated with FD-AFC method.

For example, such fast re-convergence (verified for the DFC method) makes the feedback path change inaudible in most cases, while for FD-AFC method and especially for the TD-AFC, the feedback path change can introduce severe sound artifacts. Moreover, FIG. 9 demonstrates the superiority of the method of training provided by the present disclosure. In other words, using synthetically generated feedback path transfer functions (e.g., during a pre-training process) and measured feedback path transfer functions (e.g., during a fine-tuning process) to train the ML model allow a faster convergence rate along with lower steady state errors, in turn improving the trade-off between convergence rate and steady-state error (e.g., when compared to the conventional adaptive filtering techniques and/or existing ML-based feedback control methods).

FIG. 9 shows a significant performance drop when using synthetically generated feedback path transfer functions to train the ML model (e.g., e.g., DFC(S) method, see curve 706). Such significant performance drop may result from a mismatch between the training data and the target data with the testing data set.

Furthermore, FIG. 9 shows a sub-optimal performance behavior when using measured feedback path transfer functions to train the ML model (e.g., e.g., DFC(M) method, see curve 608).

Embodiments of the present disclosure may provide for a method of training a ML model using synthetically generated feedback path transfer functions and measured feedback path transfer functions. Embodiments of the present disclosure may provide for a method of training a ML model using synthetically generated feedback path transfer functions. Embodiments of the present disclosure may provide for a method of training a ML model using measured feedback path transfer functions.

FIG. 9 shows that a ML model trained using synthetically generated feedback path transfer functions and measured feedback path transfer functions can, during a normal mode of operation (e.g. inference stage) and in a situation where the feedback path undergoes rapid changes, achieve an increased convergence rate by a factor of 30, while decreasing the steady-state error by 2dB.

It is observed by FIG. 9 that using synthetically generated feedback path transfer functions and measured feedback path transfer functions to train the ML allows an improvement in the estimation of a feedback path transfer function when compared to cases using either synthetically generated feedback path transfer functions or measured feedback path transfer functions to train the ML model. Nonetheless, cases using either synthetically generated feedback path transfer functions or measured feedback path transfer functions to train the ML model may also be seen as alternative options to the conventional adaptive filtering techniques and/or existing ML techniques (e.g., TD-AFC and/or FD-AFC).

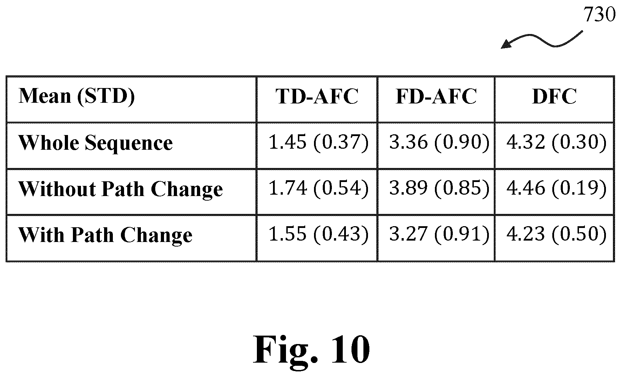

FIG. 10 shows a Table 730 illustrating example mean value and standard deviation (STD) values for a ML-based feedback control system comprising a trained ML model according to the present disclosure. The ML model is trained according to method 100 of FIG. 5.

For example, Table 730 shows a mean value as well as a standard deviation value for an TD-AFC system (e.g., employing a TD-AFC technique), an FD-AFC system (e.g., employing a FD-AFC technique), as well as for the ML-based feedback control system comprising the trained ML model (e.g., employing a deep feedback compensation (DFC) technique). The ML-based feedback control system comprising the trained ML model may be termed as an DFC system. The method 100 of FIG. 5 may be termed as the DFC technique.

For example, "Whole Sequence" can be construed as the entire testing data set with feedback path changes. For example, "Without path change" can be construed as the part of the testing data set without feedback path changes. For example, "With path change" can be construed as the part of the testing data set with feedback path changes.

The TD-AFC technique and the FD-AFC technique are baseline (e.g., benchmark, state-of-art) techniques to be compared to the DFC technique, such as provided by the present disclosure. The TD-AFC technique and the FD-AFC technique can be seen as conventional adaptive filtering techniques.

Table 730 provides a perceptual evaluation of speech quality (PESQ) score for an estimate of a feedback transfer function for each of the TD-AFC technique, FD-AFC technique, and DFC technique.

For example, the estimate of the feedback transfer function of each of the TD-AFC technique, FD-AFC technique, and DFC technique can be compared with a reference feedback transfer function (e.g., a training feedback transfer function) from an ideal feedback free system, so that a processed signal is generated from an external input signal component without influence of a feedback input signal component and/or an estimate of the feedback input signal component. In other words, the estimate of the feedback transfer function of each of the TD-AFC technique, FD-AFC technique, and DFC technique can be compared with a reference feedback transfer function (e.g., a training feedback transfer function) from a known feedback system (e.g., with a known feedback transfer function, such as the reference one).

FIG. 10 shows that the TD-AFC technique provides the lowest scores. Such low scores are a result of sound deterioration in low frequencies.

Although an DFC system is configured to operate at all frequencies, which may significantly deteriorate an input signal in the low frequencies, the DFC system manages to mitigate such issue. Although it is observed that employing an FD-AFC technique without feedback adaptation (e.g., control) in the low frequencies can also mitigate such issue, a DFC system can still deliver PESQ scores that are better (e.g., greater) than a FD-AFC system employing the FD-AFC technique.

For example, when each of the TD-AFC system, the FD-AFC system, and the DFC technique is required to react to a feedback path change (e.g., in a static and/or dynamic feedback situation), a significant difference in the respective PESQ scores is verified. In particular, it is shown that there is a difference of 0.96 when comparing the PESQ score achieved by the DFC technique with the PESQ score achieved by the FD-AFC system in a feedback change situation, such as in the time interval from 7.4 seconds to 9.4 seconds of FIG. 9. It is also shown that there is a difference of 2.68 when comparing the PESQ score achieved by the DFC technique with the PESQ score achieved by the TD-AFC system in the feedback change situation occurring in the time interval from 7.4 seconds to 9.4 seconds of FIG. 9.

Moreover, Table 730 shows that the standard deviations (e.g., and/or variance) of the PESQ scores of both TD-AFC system and FD-AFC system are higher than the standard deviations (e.g., and/or variance) of the PESQ scores of the DFC system, thereby demonstrating superiority of the DFC system (provided by the disclosure) over the TD-AFC system and FD-AFC system.

The term 'or a processed version thereof' may e.g., cover such extracted features from an original audio signal. The term 'or a processed version thereof' may e.g., also cover an original audio signal that has been subject to a processing algorithm that applies gain or attenuation and/or delay to the original audio signal and this results in a modified audio signal (preferably enhanced in some sense, e.g., noise reduced relative to a target signal, or simply delayed).

It is intended that the structural features of the devices described above, either in the detailed description and/or in the claims, may be combined with steps of the method, when appropriately substituted by a corresponding process.

As used, the singular forms "a," "an," and "the" are intended to include the plural forms as well (i.e. to have the meaning "at least one"), unless expressly stated otherwise. It will be further understood that the terms "includes," "comprises," "including," and/or "comprising," when used in this specification, specify the presence of stated features, integers, steps, operations, elements, and/or components, but do not preclude the presence or addition of one or more other features, integers, steps, operations, elements, components, and/or groups thereof. It will also be understood that when an element is referred to as being "connected" or "coupled" to another element, it can be directly connected or coupled to the other element, but an intervening element may also be present, unless expressly stated otherwise. Furthermore, "connected" or "coupled" as used herein may include wirelessly connected or coupled. As used herein, the term "and/or" includes any and all combinations of one or more of the associated listed items. The steps of any disclosed method are not limited to the exact order stated herein, unless expressly stated otherwise.

It should be appreciated that reference throughout this specification to "one embodiment" or "an embodiment" or "an aspect" or features included as "may" means that a particular feature, structure, or characteristic described in connection with the embodiment is included in at least one embodiment of the disclosure. Furthermore, the particular features, structures or characteristics may be combined as suitable in one or more embodiments of the disclosure. The previous description is provided to enable any person skilled in the art to practice the various aspects described herein. Various modifications to these aspects will be readily apparent to those skilled in the art.

The claims are not intended to be limited to the aspects shown herein but are to be accorded the full scope consistent with the language of the claims, wherein reference to an element in the singular is not intended to mean "one and only one" unless specifically so stated, but rather "one or more." Unless specifically stated otherwise, the term "some" refers to one or more.

## Claims

1. A method, performed by an electronic device, for training a machine learning (ML) model for use in a feedback control system of a hearing aid, wherein the method comprises:

   • executing a plurality of training iterations, each training iteration of the plurality of training iterations comprising:

   ◦ obtaining training data comprising:

   ▪ a training input signal comprising an external input signal component and a feedback input signal component, the external input signal component being indicative of sound from a known, simulated acoustic environment of the hearing aid, and the feedback input signal component being indicative of acoustic and/or mechanical feedback originating from a feedback path of the hearing aid, and
   ▪ a training processed signal indicative of one or more applied processing algorithms to a training feedback corrected input signal, the training feedback corrected input signal being indicative of a feedback corrected version of the training input signal;

   ◦ obtaining target data comprising a training feedback path transfer function (h(n)) representative of an impulse response of the feedback path (FBP) of the hearing aid;
   ◦ determining, based on the training data, an estimate of the training feedback path transfer function; and

∘ updating the ML model based on the target data and the estimate of the training feedback path transfer function;

wherein the ML model comprises, in the following order, a convolutional layer, a first fully connected (FC) layer, and a long-short term memory (LSTM) layer.

2. The method according to claim 1, wherein the ML model further comprises one or more of: a second FC layer and a third FC layer, each of the first, second, and third FC layers comprising an FC-based technique indicative of an activation function, the activation function comprising one or more of: a sigmoid function, a hyperbolic tangent, a rectified linear unit (ReLU) function, a leaky ReLU function, a swish function, and Gaussian Error linear unit (GELU) function.

3. The method according to any of claims 1-2, wherein determining the estimate of the training feedback path transfer function comprises:

• determining a first pre-processed signal by applying a pre-processing technique to the training input signal; and
• determining a second pre-processed signal by applying the pre-processing technique to the training processed signal.

4. The method according to claim 3, wherein:

• determining the first pre-processed signal comprises:

o determining a frequency-domain training input signal by applying a Fourier transform-based technique to the training input signal; and

• determining the second pre-processed signal comprises:

∘ determining a frequency-domain training processed signal by applying the Fourier transform-based technique to the training processed signal.

5. The method according to claim 4, wherein:

• determining the first pre-processed signal comprises:

o determining a normalized version of the frequency-domain training input signal, wherein the normalized version of the frequency-domain training input signal comprises a first primary component and a first secondary component; and

• determining the second pre-processed signal comprises:

o determining a normalized version of the frequency-domain training processed signal, wherein the normalized version of the frequency-domain training processed signal comprises a second primary component and a second secondary component.

6. The method according to any of claims 3-5, wherein the convolutional layer comprises a convolutional-based technique, and wherein determining the estimate of the training feedback path transfer function comprises:

• determining a first ML processed signal by applying the convolutional-based technique to the first pre-processed signal and the second pre-processed signal.

7. The method according to claim 6, wherein the first FC layer comprises a first FC-based technique, and wherein determining the estimate of the training feedback path transfer function comprises:

• determining a third ML processed signal by applying the first FC-based technique to the first ML processed signal, the first pre-processed signal, and the second pre-processed signal .

8. The method according to claim 7, wherein the LSTM layer comprises an LSTM-based technique, wherein determining the estimate of the training feedback path transfer function comprises:

• determining a fourth ML processed signal by applying the LSTM-based technique to the third ML processed signal, wherein the fourth ML processed signal is the estimate of the training feedback path transfer function.

9. The method according to claim 8, wherein the second FC layer comprises a second FC-based technique, wherein determining the estimate of the training feedback path transfer function comprises:

• determining a fifth ML processed signal by applying the second FC-based technique to the fourth ML processed signal, wherein the fifth ML processed signal is the estimate of the training feedback path transfer function.

**EP 4 704 443 A1**

**10.** The method according to claim 9, wherein the third FC layer comprises a third FC-based technique, wherein determining the estimate of the training feedback path transfer function comprises:

> • determining a sixth ML processed signal by applying the third FC-based technique to the fifth ML processed signal, wherein the sixth ML processed signal is the estimate of the training feedback path transfer function.

**11.** The method according to claim 10, wherein the ML model further comprises a pooling layer, the pooling layer comprising a pooling-based technique, wherein determining the estimate of the training feedback path transfer function comprises:

> • determining a seventh ML processed signal by applying the pooling-based technique to the sixth ML processed signal, wherein the seventh ML processed signal is the estimate of the training feedback path transfer function.

**12.** The method according to any of claims 3-11, wherein determining the estimate of the training feedback path transfer function comprises:

> • providing the first pre-processed signal and the second pre-processed signal as input to the ML model.

**13.** The method according to any of claims 1-12, wherein updating the ML model comprises:

> • determining a training error signal based on the estimate of the training feedback path transfer function and the training feedback path transfer function; and
> • updating a plurality of weights, using a learning rule, of the ML model based on the training error signal.

**14.** A hearing aid comprising:

> • an input unit configured to provide an electric input signal representing a sound in an environment of a user of the hearing aid, wherein the electric input signal comprises an external input signal component and a feedback input signal component, the external input signal component being indicative of the sound in the environment of the hearing aid, the feedback input signal component being indicative of acoustic and/or mechanical feedback originating from a feedback path from an output unit of the hearing aid to the input unit of the hearing aid;
> • a signal processing unit configured to provide a processed signal by applying one or more processing algorithms to a feedback corrected input signal,
wherein the feedback corrected input signal is indicative of a feedback corrected version of the electric input signal; and
• the output unit configured to output, based on the processed signal, an audible signal to the user of the hearing aid,
wherein the hearing aid comprises a feedback control system including a trained machine learning (ML) model, the feedback control system being configured to:
• determine an estimate of the feedback input signal component based on an estimate of a feedback path transfer function,

> wherein the feedback path transfer function is representative of an impulse response of the feedback path, and
> wherein the trained ML model is configured to provide the estimate of the feedback path transfer function based on the electric input signal and the processed signal, and
> wherein the ML model is trained according to the method of any one of claims 1-13; and

• determine the feedback corrected input signal based on the electric input signal and the estimate of the feedback input signal component.

Fig. 1

300

302A

302, 302B

301

304

304A

305

305A

306

306A

310

310A

308AA

308A

308B

308

308BA

**Fig. 2**

600

S602 Obtaining an electric input signal, the electric input signal comprising an external input signal component and a feedback input signal component

S604 Determining an estimate of a feedback path transfer function based on the electric input signal and a first processed signal

S606 Determining an estimate of the feedback input signal component based on the estimate of the feedback path transfer function

S608 Determining the feedback corrected input signal based on the electric input signal and the estimate of the feedback input signal component

S610 Providing a second processed signal by applying one or more processing algorithms to the feedback corrected input signal

S612 Outputting an audible signal based on the second processed signal

# Fig. 3

**Fig. 4A**

EP 4 704 443 A1

**Fig. 4B**

100

S102 Executing a plurality of training iterations

S104

S106

S108

S108A

S108AA

S108AB

S108B

S108BA

S108BB

S108C

S108D

S108E

S108F

S108G

S108H

S108I

S110

S110A

S110B

**Fig. 5**

200

201

202

203

**Fig. 6**

Fig. 7

500

| Layer | Input Size | Output Size | # Parameters |
|---|---|---|---|
| Convolutional | $2 \times M \times 130$ | $M \times 130$ | 41 |
| First FC | $M \times 390$ | $M \times 390$ | 152k |
| LSTM | $M \times 390$ | $M \times 256$ | 633k |
| Second FC | $M \times 256$ | $M \times 128$ | 32.9k |
| Third FC | $M \times 128$ | $M \times 64$ | 8.3k |

# Fig. 8

Fig. 9

730

| Mean (STD) | TD-AFC | FD-AFC | DFC |
|---|---|---|---|
| Whole Sequence | 1.45 (0.37) | 3.36 (0.90) | 4.32 (0.30) |
| Without Path Change | 1.74 (0.54) | 3.89 (0.85) | 4.46 (0.19) |
| With Path Change | 1.55 (0.43) | 3.27 (0.91) | 4.23 (0.50) |

# Fig. 10

Europäisches
Patentamt
European
Patent Office
Office européen
des brevets

# EUROPEAN SEARCH REPORT

**Application Number**

EP 25 19 7794

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/044509 A1 (GUO MENG [DK] ET AL) 9 February 2023 (2023-02-09) | 14 | INV. H04R25/00 |
| A | * paragraphs [0074] - [0096], [0136], [0147] - [0154]; claims 10, 11; figures 1 - 4 * | 1-13 | ADD. G06N3/08 |
| A | De Marchi Leonardo ET AL: "Selected pages from book" In: "Hands-on Neural Networks", 30 May 2019 (2019-05-30), Packt Publishing Ltd., XP093245024, ISBN: 978-1-78899-259-6 pages 7-11, * page 10 * * page 66 * * page 117 * | 1-14 | |
| X | US 2023/121895 A1 (GUO MENG [DK] ET AL) 20 April 2023 (2023-04-20) | 14 | |
| A | * paragraphs [0147] - [0154], [0179]; figure 1 * | 1-13 | TECHNICAL FIELDS SEARCHED (IPC) |
| A | SAINATH TARA N ET AL: "Convolutional, Long Short-Term Memory, fully connected Deep Neural Networks", 2015 IEEE INTERNATIONAL CONFERENCE ON ACOUSTICS, SPEECH AND SIGNAL PROCESSING (ICASSP), IEEE, 19 April 2015 (2015-04-19), pages 4580-4584, XP033187628, DOI: 10.1109/ICASSP.2015.7178838 [retrieved on 2015-08-04] * the whole document * | 1-14 | H04R |

The present search report has been drawn up for all claims

| Place of search | Date of completion of the search | Examiner |
|---|---|---|
| The Hague | 9 December 2025 | Lörch, Dominik |

EPO FORM 1503 03.82 (P04C01)

1

## ANNEX TO THE EUROPEAN SEARCH REPORT
## ON EUROPEAN PATENT APPLICATION NO.

EP 25 19 7794

This annex lists the patent family members relating to the patent documents cited in the above-mentioned European search report.
The members are as contained in the European Patent Office EDP file on
The European Patent Office is in no way liable for these particulars which are merely given for the purpose of information.

09-12-2025

| Patent document cited in search report | Publication date | Patent family member(s) | | Publication date |
|---|---|---|---|---|
| US 2023044509 A1 | 09-02-2023 | CN | 115706909 A | 17-02-2023 |
| | | EP | 4132009 A2 | 08-02-2023 |
| | | US | 2023044509 A1 | 09-02-2023 |
| US 2023121895 A1 | 20-04-2023 | CN | 115996349 A | 21-04-2023 |
| | | EP | 4171070 A1 | 26-04-2023 |
| | | US | 2023121895 A1 | 20-04-2023 |

EPO FORM P0459

For more details about this annex : see Official Journal of the European Patent Office, No. 12/82